(19) Europäisches Patentamt
European Patent Office
Office européen des brevets

(11) EP 4 480 991 A1

(12) **EUROPEAN PATENT APPLICATION**
published in accordance with Art. 153(4) EPC

(43) Date of publication:
**25.12.2024 Bulletin 2024/52**

(21) Application number: **24753369.8**

(22) Date of filing: **07.02.2024**

(51) International Patent Classification (IPC):
***C08G 64/02*** (2006.01) ***C08G 18/44*** (2006.01)
***C08G 64/30*** (2006.01) ***C08G 71/04*** (2006.01)
***C09D 175/04*** (2006.01) ***C09J 175/04*** (2006.01)
***D01F 6/70*** (2006.01) ***D06N 3/14*** (2006.01)

(52) Cooperative Patent Classification (CPC):
**C08G 18/44; C08G 64/02; C08G 64/30; C08G 71/04; C09D 175/04; C09J 175/04; D01F 6/70; D06N 3/14**

(86) International application number:
**PCT/JP2024/004009**

(87) International publication number:
**WO 2024/166926 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.02.2023 JP 2023018540**
**16.03.2023 JP 2023042052**
**24.08.2023 JP 2023136449**

(71) Applicant: **Mitsubishi Chemical Corporation**
**Tokyo 100-8251 (JP)**

(72) Inventors:
- **WAKABAYASHI, Kazuki**
  **Tokyo 100-8251 (JP)**
- **AYUTA, Mitsuhiro**
  **Tokyo 100-8251 (JP)**
- **KOZUMA, Daisuke**
  **Tokyo 100-8251 (JP)**
- **UCHIDA, Shuuma**
  **Tokyo 100-8251 (JP)**
- **HAYASHI, Hiroyuki**
  **Tokyo 100-8251 (JP)**
- **YAMANAKA, Takayuki**
  **Tokyo 100-8251 (JP)**
- **UENO, Sakyo**
  **Tokyo 100-8251 (JP)**

(74) Representative: **Vossius & Partner Patentanwälte Rechtsanwälte mbB**
**Siebertstrasse 3**
**81675 München (DE)**

# (54) POLYCARBONATE DIOL, METHOD FOR PRODUCING POLYCARBONATE DIOL, AND POLYURETHANE

(57) A polycarbonate diol contains a structural unit (1) represented by the following general formula (I) and a structural unit (2) represented by the following general formula (II).

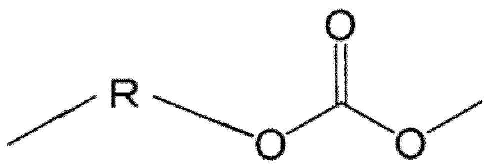

(I)

(In the general formula (I), R represents a hydrocarbon group having 2 to 20 carbon atoms, which may have a substituent or a hetero atom.)

EP 4 480 991 A1

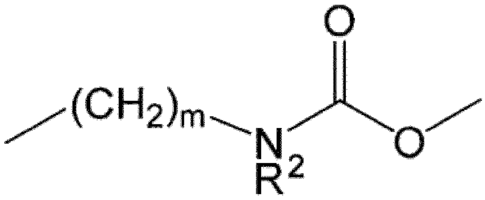

(II)

(In the general formula (II), m is an integer of 2 to 20. $R^2$ represents an alkyl group having 1 to 20 carbon atoms which may have a substituent, or a hydrogen atom.)

## Description

TECHNICAL FIELD

The present invention relates to a polycarbonate diol and a method for producing a polycarbonate diol. The present invention also relates to a polyurethane obtained by using the polycarbonate diol.

BACKGROUND ART

A polycarbonate type polyurethane that uses a polycarbonate diol as a raw material for a soft segment part has been proposed as a polyurethane produced on an industrial scale (Non-Patent Literature 1).

The polycarbonate type polyurethane is considered the most durable grade in terms of heat resistance and hydrolysis resistance. This polyurethane is widely used in durable films, artificial leather for automobiles, (aqueous) coating materials, and adhesives.

In the above applications, the polyurethane is required to be excellent in mechanical properties, to have a reduced variation in mechanical properties from the viewpoint of quality uniformity, and to maintain good chemical resistance.

As a raw material for the polycarbonate type polyurethane, in polycarbonate diols currently widely available on the market, a linear aliphatic diol having 3 to 6 carbon atoms, such as 1,6-hexanediol, is mainly used as a raw material dihydroxy compound.

Further, in order to improve the flexibility, crystallinity, strength, and the like of the polyurethane, an aliphatic polycarbonate diol using 1,6-hexanediol in combination with another dihydroxy compound has been proposed.

For example, Patent Literature 1 discloses a technique of improving the flexibility and elastic recovery of the obtained polyurethane by combining 1,6-hexanediol and 1,5-pentanediol as a raw material dihydroxy compound for a polycarbonate diol.

Patent Literature 2 discloses a technique of improving the oil resistance, heat resistance, and cold resistance of the obtained polyurethane by combining 1,6-hexanediol and 1,4-butanediol as a raw material dihydroxy compound for a polycarbonate diol.

Patent Literature 3 discloses a technique of improving the strength and hardness of the obtained polyurethane by combining 1,6-hexanediol and isosorbide as a raw material dihydroxy compound for a polycarbonate diol.

Patent Literature 4 discloses a technique of preventing coloration of the obtained polycarbonate, moderately improving the reactivity with a polyisocyanate compound, and improving the efficiency of polyurethane production by containing a tertiary amino alcohol in a polycarbonate diol composition.

CITATION LIST

PATENT LITERATURE

Patent Literature 1: JPH02-289616A
Patent Literature 2: JPH05-51428A
Patent Literature 3: JP2012-072350A
Patent Literature 4: JP2018-053072A

NON-PATENT LITERATURE

Non Patent Literature 1: Hatsuji Matsunaga (supervisor), "Polyurethane no Kiso to Oyo (Basic and Application of Polyurethane)", pp. 96-106, CMC Publishing Co., Ltd., issued in November 2006

SUMMARY OF INVENTION

TECHNICAL PROBLEM

However, Patent Literatures 1 to 4 make no mention that an amine-based compound contained in a raw material linear aliphatic diol having 2 to 20 carbon atoms, such as 1,6-hexanediol, maintains good chemical resistance of the polyurethane obtained by using the produced polycarbonate diol, but has no influence on mechanical properties or a variation in mechanical strength.

Therefore, fully satisfactory results have not been obtained in the related art in terms of production efficiency of the polycarbonate diol in the case of using a linear aliphatic diol having 2 to 20 carbon atoms, such as 1,6-hexanediol, as the raw material dihydroxy compound, or the cost and quality in industrially producing and using a polyurethane and the like using the polycarbonate diol.

The present invention has been made in consideration of the above problems. An object of the present invention is to provide a polycarbonate diol that provides a polyurethane excellent in mechanical properties, having a reduced variation in mechanical properties from the viewpoint of quality uniformity, and maintaining good chemical resistance in the case of using a polycarbonate diol containing a structural unit derived from a linear aliphatic diol having 2 to 20 carbon atoms, such as 1,6-hexanediol, as a raw material for a polyurethane.

SOLUTION TO PROBLEM

The inventors of the present invention have conducted intensive research to solve the above problems, and as a result, have found that the above problems can be solved by incorporating, in a polycarbonate diol, a structural unit derived from an amine.

The present invention has been achieved based on such findings, and the gist thereof is as follows.

[1] A polycarbonate diol containing: a structural unit (1) represented by the following general formula (I) and a structural unit (2) represented by the following general formula (II).

[Chem. 1]

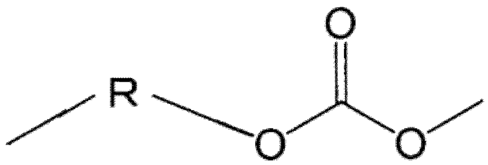

(I)

(In the general formula (I), R represents a hydrocarbon group having 2 to 20 carbon atoms, which may have a substituent or a hetero atom.)

[Chem. 2]

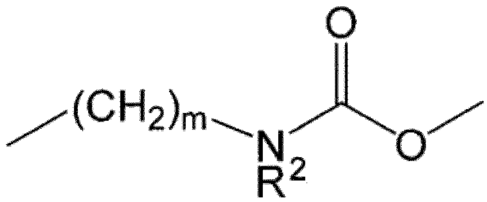

(II)

(In the general formula (II), m is an integer of 2 to 20. $R^2$ represents an alkyl group having 1 to 20 carbon atoms, which may have a substituent, or a hydrogen atom.)

[2] The polycarbonate diol according to [1], in which the structural unit (1) includes a structural unit (1a) represented by the following general formula (Ia).

[Chem. 3]

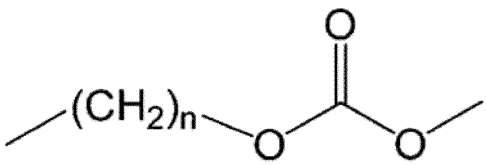

(Ia)

(In the general formula (Ia), n is an integer of 2 to 20.)

[3] The polycarbonate diol according to [1] or [2], in which the structural unit (2) is a structural unit derived from an amine having an aliphatic hydrocarbon group having 2 to 20 carbon atoms, which may have a substituent.

[4] The polycarbonate diol according to any one of [1] to [3], in which the structural unit (2) contains one or more amino groups and one or more functional groups, and the functional group is a structural unit derived from at least one amine selected from the group consisting of a hydroxy group, a carboxy group, a formyl group, and an amino group.

[5] The polycarbonate diol according to any one of [1] to [4], in which the structural unit (2) includes a structural unit derived from an amine represented by the following general formula (II-1).

[Chem. 4]

$$R^2HN-R^1\left[X\right]_r \qquad (II\text{-}1)$$

(In the general formula (II-1), $R^1$-$[X]_r$ represents an alkyl group having 2 to 20 carbon atoms and having r substituents X, which may have a substituent other than X. X represents any one of a hydroxy group, a carboxy group, a formyl group, and an amino group, r is an integer of 1 to 6. $R^2$ represents an alkyl group having 1 to 20 carbon atoms, which may have a substituent, or a hydrogen atom.)

[6] The polycarbonate diol according to any one of [1] to [5], in which the structural unit (2) is a structural unit derived from at least one amine selected from a primary amine (2-1) and a secondary amine (2-2).

[7] The polycarbonate diol according to [5] or [6], in which the structural unit (2) includes a structural unit derived from at least one amine selected from 6-amino-1-hexanol, 6-methylamino-1-hexanol, and 6-ethylamino-1-hexanol.

[8] The polycarbonate diol according to any one of [1] to [7], in which a content of the structural unit (2) contained in the polycarbonate diol is 1 ppm by mass or more in terms of nitrogen atoms with respect to a total mass of the polycarbonate diol.

[9] The polycarbonate diol according to any one of [1] to [8], in which the content of the structural unit (2) contained in the polycarbonate diol is 1,200 ppm by mass or less in terms of nitrogen atoms with respect to the total mass of the polycarbonate diol.

[10] The polycarbonate diol according to [9], in which the content of the structural unit (2) contained in the polycarbonate diol is 80 ppm by mass or less in terms of nitrogen atoms with respect to the total mass of the polycarbonate diol.

[11] The polycarbonate diol according to [10], further containing:

an aldehyde.

[12] The polycarbonate diol according to any one of [1] to [11], in which the polycarbonate diol has a number average molecular weight (Mn) of 250 or more and 5,000 or less.

[13] A method for producing a polycarbonate diol, including:

polycondensing a carbonate compound and a dihydroxy compound composition containing an amine and a dihydroxy compound (1) represented by the following general formula (I-1) by a transesterification reaction in the presence of a catalyst, to obtain a polycarbonate diol containing a structural unit (2) represented by the following general formula (II).

[Chem. 5]

$$HO\text{-}R\text{-}OH \qquad (I\text{-}1)$$

(In the general formula (1-1), R is a hydrocarbon group having 2 to 20 carbon atoms, which may have a substituent or a hetero atom.)

[Chem. 6]

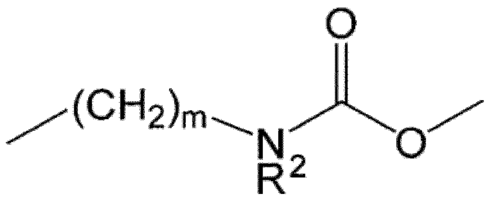

( II )

(In the general formula (II), m is an integer of 2 to 20. $R^2$ represents an alkyl group having 1 to 20 carbon atoms, which may have a substituent, or a hydrogen atom.)

[14] The method for producing a polycarbonate diol according to [13], in which the polycarbonate diol contains a structural unit (1) represented by the following general formula (I).

[Chem. 7]

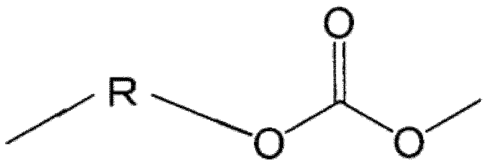

( I )

(In the general formula (I), R is a hydrocarbon group having 2 to 20 carbon atoms, which may have a substituent or a hetero atom.)

[15] The method for producing a polycarbonate diol according to [13] or [14], in which the amine is an amine having an aliphatic hydrocarbon group having 2 to 20 carbon atoms which may have a substituent.

[16] The method for producing a polycarbonate diol according to any one of [13] to [15], in which the amine contains one or more amino groups and one or more functional groups, and the functional group is at least one selected from the group consisting of a hydroxy group, a carboxy group, a formyl group, and an amino group.

[17] The method for producing a polycarbonate diol according to any one of [13] to [16], in which the amine includes an amine represented by the following general formula (II-1).

[Chem. 8]

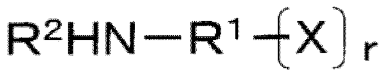

( II-1 )

(In the general formula (II-1), $R^1$-$[X]_r$ represents an alkyl group having 2 to 20 carbon atoms and having r substituents X, which may have a substituent other than X. X represents any one of a hydroxy group, a carboxy group, a formyl group, and an amino group. r is an integer of 1 to 6. $R^2$ represents an alkyl group having 1 to 20 carbon atoms, which may have a substituent, or a hydrogen atom.)

[18] The method for producing a polycarbonate diol according to any one of [13] to [17], in which the amine includes at least one selected from a primary amine (2-1) and a secondary amine (2-2).

[19] The method for producing a polycarbonate diol according to [17] or [18], in which the amine includes at least one selected from 6-amino-1-hexanol, 6-methylamino-1-hexanol, and 6-ethylamino-1-hexanol.

[20] The method for producing a polycarbonate diol according to any one of [13] to [19], in which a content of the amine in the dihydroxy compound composition is 1 ppm by mass or more in terms of nitrogen atoms with respect to a total mass of the dihydroxy compound composition.

[21] The method for producing a polycarbonate diol according to any one of [13] to [20], in which the content of the amine in the dihydroxy compound composition is 1,500 ppm by mass or less in terms of nitrogen atoms with respect to the total mass of the dihydroxy compound composition.

[22] The method for producing a polycarbonate diol according to [21], in which the content of the amine in the dihydroxy compound composition is 100 ppm by mass or less in terms of nitrogen atoms with respect to the total mass of the

dihydroxy compound composition.
[23] The method for producing a polycarbonate diol according to [22], in which the dihydroxy compound composition further contains an aldehyde.
[24] The method for producing a polycarbonate diol according to any one of any one of [13] to [23], in which a content of the structural unit (2) contained in the polycarbonate diol is 1 ppm or more in terms of nitrogen atoms with respect to a total mass of the polycarbonate diol.
[25] The method for producing a polycarbonate diol according to any one of any one of [13] to [24], in which the content of the structural unit (2) contained in the polycarbonate diol is 1,200 ppm by mass or less in terms of nitrogen atoms with respect to the total mass of the polycarbonate diol.
[26] The method for producing a polycarbonate diol according to [25], in which the content of the structural unit (2) contained in the polycarbonate diol is 80 ppm by mass or less in terms of nitrogen atoms with respect to the total mass of the polycarbonate diol.
[27] The method for producing a polycarbonate diol according to [26], in which the polycarbonate diol further contains an aldehyde.
[28] A polyurethane obtained by using the polycarbonate diol according to any one of any one of [1] to [12].
[29] The polyurethane according to [28], which is for use in any one selected from the group consisting of an active energy ray-curable polymer composition, an artificial leather, a synthetic leather, a coating material, a coating agent, an elastic fiber, a pressure-sensitive adhesive, and an adhesive.

ADVANTAGEOUS EFFECTS OF INVENTION

According to the present invention, it is possible to provide a polycarbonate diol that provides a polyurethane excellent in mechanical properties and that can stably provide a polyurethane having a reduced variation in mechanical properties, maintaining good chemical resistance, and having a high quality.

DESCRIPTION OF EMBODIMENTS

Hereinafter, embodiments of the present invention will be described in detail. The present invention is not limited to the following embodiments, and various modifications can be made within the scope of the gist of the present invention.
In the present description, the term "structural unit" refers to a unit derived from a raw material compound used in production of a polycarbonate diol, which is formed by polymerization of the raw material compound, and refers to a partial structure sandwiched between any linking groups in the obtained polymer. The structural unit also includes a partial structure in which one terminal is a linking group and the other is a polymerization reactive group at a terminal portion of a polymer. The structural unit may be a unit formed directly by a polymerization reaction, or may be a unit obtained by converting a part of the unit into a different structure by treating the obtained polymer.
In the present description, the term "repeating unit" is synonymous with the term "structural unit".
In the present description, a numerical range expressed using "to" means a range that includes numerical values written before and after "to" as an upper limit value and a lower limit value, unless otherwise specified. For example, "A to B" means A or more and B or less.
In the present description, "including A or B" means "including A," "including B," or "including A and B," unless otherwise specified.
In the present description, "mass%" indicates the content ratio of a given component contained in a total amount of 100 mass%.
In the present description, "mass%", "ppm by mass" and "part by mass" have the same meanings as "wt%", "ppm by weight" and "part by weight", respectively. In addition, in the case of simply referring to as "ppm", it indicates "ppm by weight".
In the present description, the term "the obtained polyurethane" refers to a polyurethane produced using a polycarbonate diol according to the present invention.

[Polycarbonate Diol]

The polycarbonate diol according to the present invention is a polycarbonate diol containing a structural unit (1) represented by the following general formula (I) and a structural unit (2) represented by the following general formula (II) (hereinafter, may be referred to as the "polycarbonate diol according to the present invention").

[Chem. 9]

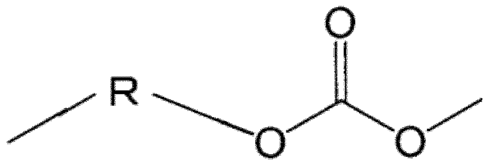

(I)

(In the general formula (I), R represents a hydrocarbon group having 2 to 20 carbon atoms, which may have a substituent or a hetero atom.)

[Chem. 10]

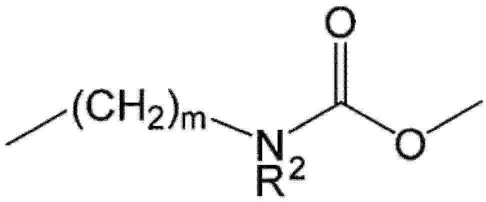

(II)

(In the general formula (II), m is an integer of 2 to 20. $R^2$ represents a hydrogen atom or an alkyl group having 1 to 20 carbon atoms which may have a substituent.)

When the polycarbonate diol according to the present invention contains the structural unit (2), the polyurethane obtained by using this polycarbonate diol is excellent in mechanical strength, and it is possible to stably produce a polyurethane having a reduced variation in mechanical strength, maintaining good chemical resistance, and having a high quality.

The polycarbonate diol according to the present invention can contain a structural unit represented by the following general formula (IIIa) or the following general formula (IIIb) as a terminal structure.

[Chem. 11]

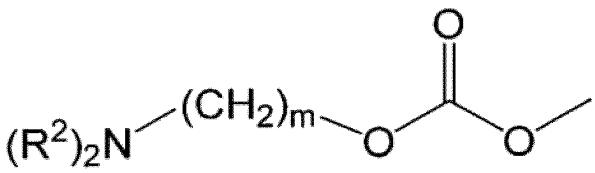

(IIIa)

(In the general formula (IIIa), m is an integer of 2 to 20. $R^2$ has the same meaning as $R^2$ in the formula (II) and represents a hydrogen atom or an alkyl group having 1 to 20 carbon atoms which may have a substituent.)

[Chem. 12]

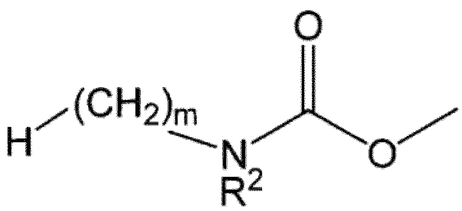

(IIIb)

(In the general formula (IIIb), m is an integer of 2 to 20. $R^2$ has the same meaning as $R^2$ in the formula (II) and represents a hydrogen atom or an alkyl group having 1 to 20 carbon atoms which may have a substituent.)

In addition, when the polycarbonate diol according to the present invention contains the structural unit (1), the polyurethane obtained by using this polycarbonate diol has good mechanical properties and chemical resistance.

Further, the polycarbonate diol according to the present invention can contain a structural unit (3) derived from a dihydroxy compound (3) other than a compound (1) to be described later, if necessary, within a range that does not impair the effects of the present invention.

(Molecular Weight of Polycarbonate Diol)

The lower limit of the number average molecular weight (Mn) of the polycarbonate diol according to the present invention is not particularly limited, and is preferably 250 or more, more preferably 300 or more, and still more preferably 400 or more, from the viewpoint of improving the mechanical properties of the obtained polyurethane. On the other hand, the upper limit of the number average molecular weight (Mn) is not particularly limited, and is preferably 5,000 or less, more preferably 4,000 or less, and still more preferably 3,000 or less, from the viewpoint of reducing the viscosity of the polycarbonate diol according to the present invention to a certain degree and maintaining good handleability, and from the viewpoint of maintaining good chemical resistance of the obtained polyurethane.

The upper limit and the lower limit can be freely combined. for example, the number average molecular weight (Mn) of the polycarbonate diol in the present invention is preferably 250 or more and 5,000 or less, more preferably 300 or more and 4,000 or less, and still more preferably 400 or more and 3,000 or less.

The number average molecular weight (Mn) is a molecular weight calculated from a hydroxyl value, and the measurement conditions are as described in Examples to be described later.

(Structural Unit (1))

The above structural unit (1) is a structural unit represented by the following general formula (I) contained in the structure of the polycarbonate diol according to the present invention.

[Chem. 13]

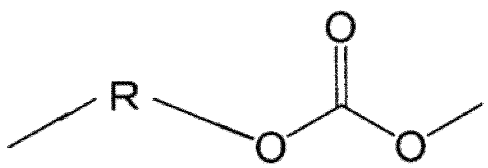

(I)

(In the general formula (1), R represents a hydrocarbon group having 2 to 20 carbon atoms, which may have a substituent or a hetero atom.)

In the polycarbonate diol according to the present invention, as the structural unit (1), a structural unit derived from a dihydroxy compound (1) represented by the following general formula (I-1) (also simply referred to as a "compound (1)" in the present description) can be used.

[Chem. 14]

HO-R-OH (I-1)

(In the general formula (I-1), R is a hydrocarbon group having 2 to 20 carbon atoms, which may have a substituent or a hetero atom.)

In the polycarbonate diol according to the present invention, the lower limit of the content ratio of the structural unit (1) is not particularly limited, and is preferably 40 mass% or more, more preferably 60 mass% or more, still more preferably 75 mass% or more, and particularly preferably 80 mass% or more with respect to 100%, i.e., the total mass of the polycarbonate diol, from the viewpoint of improving the mechanical properties and the chemical resistance of the obtained polyurethane. On the other hand, the upper limit of the content ratio of the structural unit (1) is not particularly limited, and may correspond to 100 mass% of the mass of the structural unit other than the structural unit (2) in the polycarbonate diol according to the present invention, or may be less than 100 mass%. Alternatively, the upper limit is more preferably 98 mass% or less, still more preferably 95 mass% or less, and particularly preferably 90 mass% or less with respect to 100%, i.e., the total mass of the polycarbonate diol, from the viewpoint of maintaining good chemical resistance of the obtained polyurethane.

The upper limit and the lower limit can be freely combined. For example, in the polycarbonate diol according to the present invention, the content ratio the content ratio of the structural unit (1) is preferably 40 mass% or more and less than

100 mass%, more preferably 60 mass% or more and 98 mass% or less, still more preferably 75 mass% or more and 95 mass% or less, and particularly preferably 80 mass% or more and 90 mass% or less with respect to 100%, i.e., the total mass of the polycarbonate diol.

In the polycarbonate diol according to the present invention, the structural unit (1) is preferably contains a structural unit represented by the following general formula (Ia), from the viewpoint of further improving the mechanical properties and the chemical resistance of the obtained polyurethane.

[Chem. 15]

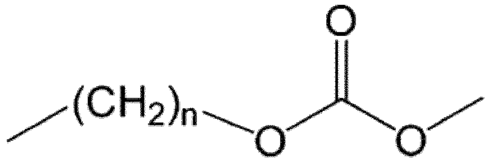

(Ia)

(In the general formula (Ia), n is an integer of 2 to 20.)

In the general formula (Ia), n is an integer of 2 to 20, preferably 3 to 10, more preferably 3 to 6, and still more preferably 4 to 6, from the viewpoint of further improving the mechanical properties and the chemical resistance of the obtained polyurethane.

In the polycarbonate diol according to the present invention, as the structural unit represented by the general formula (Ia), a structural unit derived from a compound represented by the following general formula (Ia-1) can be used.
[Chem. 16]

$HO\text{-}(CH_2)_n\text{-}OH$ (Ia-1)

(In the general formula (Ia-1), n is an integer of 2 to 20.)

The compound represented by the formula (Ia-1) is not particularly limited, and any known dihydroxy compound used as a raw material for a polycarbonate diol can be appropriately selected and used. Examples of the compound represented by the formula (Ia-1) include 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,16-hexadecanediol, 1,18-octadecanediol, and 1,20-eicosanediol. Those skilled in the art can appropriately select the compound depending on the use, the production conditions, and the like of the polycarbonate diol. For example, from the viewpoint of an excellent balance of flexibility, low-temperature properties, and chemical resistance of the obtained polyurethane, at least one compound selected from the group consisting of 1,3-propanediol, 1,4-butanediol, 1,5-pentanediol, 1,6-hexanediol, and 1,10-decanediol, and preferably at least one compound selected from the group consisting of 1,4-butanediol, 1,5-pentanediol, and 1,6-hexanediol can be used.

These compounds may be used alone or in combination of two or more kinds thereof.

In the polycarbonate diol according to the present invention, the structural unit (1) can contain a structural unit represented by the following formula (Ib), from the viewpoint of further improving the mechanical properties and the chemical resistance of the obtained polyurethane.

[Chem. 17]

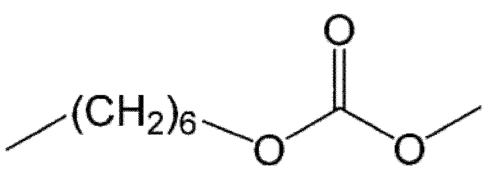

(Ib)

In the polycarbonate diol according to the present invention, as the structural unit represented by the formula (Ib), a compound represented by the following formula (Ib-1), that is, a structural unit derived from 1,6-hexanediol, can be used.
[Chem. 18]

$HO\text{-}(CH_2)_6\text{-}OH$ (Ib-1)

In this case, the content ratio of the structural unit represented by the general formula (Ia) and the content ratio of

the structural unit represented by the general formula (Ib) contained in the structural unit (1) are not particularly limited. The content ratios of the structural units represented by the general formula (Ia) and the general formula (Ib) contained in the structural unit (1) are preferably 10 mass% or more, more preferably 30 mass% or more, still more preferably 50 mass% or more, and particularly preferably 70 mass% or more with respect to 100%, i.e., the total mass of the structural unit (1), from the viewpoint of improving the handleability of the polycarbonate diol and the flexibility and the low-temperature properties of the obtained polyurethane. This content ratio may be 90 mass% or more. On the other hand, the upper limits of the content ratio of the structural unit represented by the general formula (Ia) and the content ratio of the structural unit represented by the general formula (Ib) are not particularly limited, and may be 100 mass%, or alternatively, can be 99 mass% or less with respect to 100%, i.e., the total mass of the structural unit (1).

In the polycarbonate diol according to the present invention, a compound (1) derived from a fossil fuel can be used alone as the compound (1).

Alternatively, in the polycarbonate diol according to the present invention, a compound (1) including a compound (1) derived from a biological raw material can be used as the compound (1). Specifically, by using the compound (1) derived from a biological raw material alone, or a mixture containing the compound (1) derived from a biological raw material and the compound (1) derived from a fossil fuel, it is possible to achieve the sustainable development goals (SDGs).

The compound (1) derived from a biological raw material is a compound (1) derived from a non-edible biomass and/or a non-fossil fuel.

In the present invention, the non-edible biomass refers to a resource made from raw materials such as non-edible grasses and trees. Specifically, examples thereof include, but are not limited to, cellulose, hemicellulose, lignin, and the like obtained from a woody biomass such as coniferous trees and broadleaf trees, bioethanol and biodiesel obtained from a herbaceous biomass such as corn and sugarcane stalks, soybeans, and rapeseed, and a waste oil derived from plants.

In the present invention, the non-fossil fuel refers to, for example, hydrogen or an organic matter derived from plants or animals that is not derived from a fossil fuel or a non-edible biomass. Specifically, examples thereof include, but are not limited to, methane and sugar ethanol obtained from firewood, charcoal, dried livestock dung, and the like.

In the present invention, the compound (1) derived from a fossil fuel refers to at least one selected from the group consisting of a compound (1) derived from petroleum, a compound (1) derived from coal, and a compound (1) derived from natural gas.

(Structural Unit (2))

The above structural unit (2) is a structural unit represented by the following general formula (II) contained in the structure of the polycarbonate diol according to the present invention.

[Chem. 19]

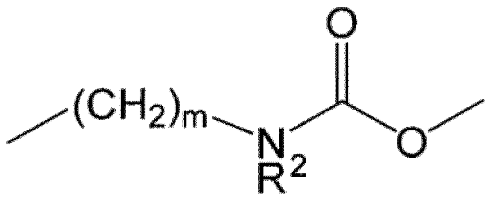

(II)

(In the general formula (II), m is an integer of 2 to 20. $R^2$ represents an alkyl group having 1 to 20 carbon atoms, which may have a substituent, or a hydrogen atom.)

In the polycarbonate diol according to the present invention, the structural unit (2) is not particularly limited. In a first embodiment, examples thereof include a structural unit derived from an amine having an aliphatic hydrocarbon group having 2 to 20 carbon atoms, which may have a substituent, from the viewpoint of further improving the mechanical properties and reducing the variation in mechanical properties of the obtained polyurethane.

In the polycarbonate diol according to the present invention, the structural unit (2) is not particularly limited. In a second embodiment, examples thereof include a structural unit containing one or more amino groups and one or more functional groups, the functional group being derived from at least one amine selected from the group consisting of a hydroxy group, a carboxy group, a formyl group, and an amino group, from the viewpoint of further improving the mechanical properties and reducing the variation in mechanical properties of the obtained polyurethane.

In the polycarbonate diol according to the present invention, the structural unit (2) is not particularly limited. In a third embodiment, examples thereof include a structural unit derived from an amine represented by the following general formula (II-1), from the viewpoint of further improving the mechanical properties and reducing the variation in mechanical properties of the obtained polyurethane.

[Chem. 20]

$$R^2HN-R^1-[X]_r \qquad (II\text{-}1)$$

(In the general formula (II-1), $R^1$-$[X]_r$ represents an alkyl group having 2 to 20 carbon atoms and having r substituents X, which may have a substituent other than X. X represents any one of a hydroxy group, a carboxy group, a formyl group, and an amino group, r is an integer of 1 to 6. $R^2$ represents an alkyl group having 1 to 20 carbon atoms, which may have a substituent, or a hydrogen atom.)

In the general formula (II-1), $NHR^2$ and X react with a carbonate bond or a hydroxy group in the polycarbonate diol, or react with an isocyanate compound used as a raw material for a polyurethane. When an excessive amount of the substituent X is present, a crosslinked structure is formed in the polyurethane during a polymerization step in producing the polyurethane, causing a gelation phenomenon, which impairs the polymerization stability. Therefore, r representing the number of the substituents X is preferably 1 or 2, and more preferably 1.

$R^1$ has 2 to 20 carbon atoms. From the viewpoint of improving the mechanical properties of the polyurethane obtained by using the polycarbonate diol according to the present invention, $R^1$ is preferably has 3 to 10 carbon atoms, more preferably has 3 to 6 carbon atoms, and still more preferably has 4 to 6 carbon atoms.

$R^2$ is an alkyl group having 1 to 20 carbon atoms or a hydrogen atom. From the viewpoint of improving the mechanical properties of the polyurethane obtained by using the polycarbonate diol according to the present invention, $R^2$ is preferably an alkyl group having 3 to 10 carbon atoms or a hydrogen atom, more preferably an alkyl group having 3 to 6 carbon atoms or a hydrogen atom, and still more preferably an alkyl group having 4 to 6 carbon atoms or a hydrogen atom.

In the polycarbonate diol according to the present invention, the structural unit (2) is not particularly limited. In a fourth embodiment, examples thereof include a structural unit derived from at least one amine selected from a primary amine (2-1) and a secondary amine (2-2), from the viewpoint of further improving the mechanical properties and reducing the variation in mechanical properties of the obtained polyurethane.

In the present invention, the primary amine (2-1) and the secondary amine (2-2) are not particularly limited, and any known amine compound can be used.

The primary amine (2-1) and the secondary amine (2-2) may be one kind or two or more kinds.

The primary amine (2-1) and the secondary amine (2-2) are not particularly limited, and examples thereof include an amine compound obtained by substituting some or all of hydroxy groups in the compound (1) with an amino group.

In the present invention, the kind of the primary amine (2-1) and the secondary amine (2-2) is not particularly limited, and for example, the amine represented by the general formula (II-1) includes the following:

in the case where $R^1$ is a propylene group having 3 carbon atoms, primary amine compounds such as 3-amino-1-propanol, and secondary amine compounds such as 3-methylamino-1-propanol;
in the case where $R^1$ is a butylene group having 4 carbon atoms, primary amine compounds such as 4-amino-1-butanol, and secondary amine compounds such as 4-methylamino-1-butanol;
in the case where $R^1$ is a pentylene group having 5 carbon atoms, primary amine compounds such as 5-amino-1-pentanol, and secondary amine compounds such as 5-methylamino-1-pentanol; and
in the case where $R^1$ is a hexylene group having 6 carbon atoms, primary amine compounds such as 6-amino-1-hexanol, and secondary amine compounds such as 6-methylamino-1 -hexanol and 6-ethylamino-1-hexanol.

Among them, at least one selected from 6-amino-1-hexanol, 6-methylamino-1-hexanol, and 6-ethylamino-1-hexanol is preferred.

In the case where the primary amine (2-1) and the secondary amine (2-2) are an amine compound obtained by substituting some or all of hydroxy groups in the compound (1) with an amino group, examples of the amine compound in the general formula (Ia-1) include the following:

in the case where n = 3, primary amine compounds such as 3-amino-1-propanol and 1,3-diaminopropane, and secondary amine compounds such as 3-methylamino-1-propanol;
in the case where n = 4, primary amine compounds such as 4-amino-1-butanol and 1,4-diaminobutane, and secondary amine compounds such as 4-methylamino-1-butanol;
in the case where n = 5, primary amine compounds such as 5-amino-1-pentanol and 1,5-diaminopentane, and secondary amine compounds such as 5-methylamino-1-pentanol; and
in the case where n = 6 (compound represented by the general formula (Ib-1)), primary amine compounds such as 6-amino-1-hexanol and 1,6-diaminohexane, and secondary amine compounds such as 6-methylamino-1-hexanol and

6-ethylamino-1-hexanol.

Alternatively, examples of the primary amine (2-1) and the secondary amine (2-2) include an alkylamine having an amino group in the molecule and no other functional groups than the amino group.

The alkylamine may be at least one selected from the group consisting of a monoalkylamine and a dialkylamine.

Specifically, examples of the alkylamine include diethylamine, propylamine, dipropylamine, butylamine, dibutylamine, amylamine, diamylamine, hexylamine, dihexylamine, heptylamine, diheptylamine, octylamine, dioctylamine, nonylamine, dinonylamine, decylamine, didecylamine, dodecylamine, and didodecylamine. In addition, examples thereof include structural isomers and derivatives of these compounds.

These compounds may be used alone or in combination of two or more kinds thereof.

Among the primary amine (2-1) and the secondary amine (2-2), the structural unit (2) in the fourth embodiment of the polycarbonate diol according to the present invention is preferably a structural unit derived from at least one amine selected from 6-amino-1-hexanol, 6-methylamino-1-hexanol, and 6-ethylamino-1-hexanol.

In the case where the compound (1) is derived from a biological raw material, particularly derived from a non-edible biomass such as glucose or xylose, depending on the origin, the primary amine (2-1) and the secondary amine (2-2) may be contained. Therefore, the above effects of the present invention can be obtained by controlling the content ratio of the primary amine (2-1) and the secondary amine (2-2) in the compound (1) to produce a polycarbonate diol, or by controlling the content ratio of the structural unit derived from an amine contained in the polycarbonate diol produced by using the compound (1).

For example, in the polycarbonate diol in the present invention, as the compound represented by the formula (Ib-1), 1,6-hexanediol derived from a fossil fuel can be used alone.

Alternatively, in the polycarbonate diol in the present invention, as the compound represented by the formula (Ib-1), 1,6-hexanediol, including 1,6-hexanediol derived from a biological raw material, can be used. Specifically, 1,6-hexanediol derived from a biological raw material alone or a mixture containing 1,6-hexanediol derived from a biological raw material and 1,6-hexanediol derived from a fossil fuel can be used. Accordingly, it is possible to achieve the sustainable development goals (SDGs).

The 1,6-hexanediol derived from a biological raw material is 1,6-hexanediol derived from a non-edible biomass and/or a non-fossil fuel.

In addition, in the present invention, the 1,6-hexanediol derived from a fossil fuel refers to at least one selected from 1,6-hexanediol derived from petroleum, 1,6-hexanediol derived from coal, and 1,6-hexanediol derived from natural gas.

The above 1,6-hexanediol derived from a biological raw material may contain the primary or secondary amines such as 6-amino-1-hexanol and 6-methylamino-1-hexanol, depending on the origin. Therefore, the above effects of the present invention can be obtained by controlling the content ratio of the primary or secondary amine in the 1,6-hexanediol to produce a polycarbonate diol, or by controlling the content ratio of the primary or secondary amine in the polycarbonate diol produced using the 1,6-hexanediol.

The upper limit of the content of the structural unit (2) contained in the polycarbonate diol according to the present invention is not particularly limited. The content of the structural unit (2) is preferably 1,200 ppm by mass or less in terms of nitrogen atoms with respect to the total mass of the polycarbonate diol, from the viewpoint of preventing coloration of the polycarbonate diol to improve the color tone and improving the yield during production of the polycarbonate diol, and further, from the viewpoint of maintaining good mechanical properties and chemical resistance of the obtained polyurethane. As the content of the structural unit (2) is larger, it acts as a coloring component in the polycarbonate diol, and the color tone of the polycarbonate diol is impaired. The upper limit of the content of the structural unit (2) is more preferably 1,000 ppm by mass or less, still more preferably 900 ppm by mass or less, particularly preferably 700 ppm by mass or less, and especially preferably 500 ppm by mass or less, in terms of nitrogen atoms.

On the other hand, the lower limit of the content of the structural unit (2) is not particularly limited, and is preferably 1 ppm by mass or more, more preferably 10 ppm by mass or more, still more preferably 50 ppm by mass or more, particularly preferably 100 ppm by mass or more, and especially preferably 150 ppm by mass or more in terms of nitrogen atoms with respect to the total mass of the polycarbonate diol, from the economic viewpoint of reducing the amount of the amine, and from the viewpoint of moderately increasing the molecular weight distribution of the polyurethane obtained by using the polycarbonate diol according to the present invention, improving the mechanical properties of the polyurethane, and reducing the variation in mechanical properties.

The upper limit and the lower limit can be freely combined. For example, the content of the amine in the polycarbonate diol according to the present invention is preferably 1 ppm by mass or more and 1,200 ppm by mass or less, more preferably 10 ppm by mass or more and 1,000 ppm by mass or less, still more preferably 50 ppm by mass or more and 900 ppm by mass or less, particularly preferably 100 ppm by mass or more and 700 ppm by mass or less, and especially preferably 150 ppm by mass or more and 500 ppm by mass or less in terms of nitrogen atoms with respect to the total mass of the polycarbonate diol.

Note that, in the polycarbonate diol according to the present invention, in the case where the upper limit of the content of the structural unit (2) contained in the polycarbonate diol is 80 ppm by mass or less in terms of nitrogen atoms with respect to the total mass of the polycarbonate diol, the larger the content of the structural unit (2), the more the coloration of the polycarbonate diol can be prevented and the better the color tone can be controlled.
When the content of the structural unit (2) contained in the polycarbonate diol is more than 80 ppm by mass in terms of nitrogen atoms, oxidation of the amine group in the structural unit (2) tends to produce a coloring component as a by-product, and the polycarbonate diol tends to be colored and the color tone tends to impaired. The upper limit of the content of the structural unit (2) in the polycarbonate diol is preferably 70 ppm by mass or less, more preferably 60 ppm by mass or less, still more preferably 50 ppm by mass or less, and most preferably 40 ppm by mass or less in terms of nitrogen atoms, from the viewpoint of preventing the coloration and further improving the color tone of the polycarbonate diol.
On the other hand, the lower limit of the content of the structural unit (2) in the polycarbonate diol is not particularly limited, and is generally preferably 0.1 ppm by mass or more, more preferably 1 ppm by mass or more, still more preferably 2 ppm by mass or more, particularly preferably 5 ppm by mass or more, and most preferably 10 ppm by mass or more in terms of nitrogen atoms with respect to the total mass of the polycarbonate diol, from the economic viewpoint of reducing the content of the structural unit (2), from the viewpoint of preventing the coloration of the polycarbonate diol caused by an aldehyde contained in the polycarbonate diol or a dihydroxy compound composition, which is a raw material for the polycarbonate diol to be described later, to improve the color tone, and from the viewpoint of moderately increasing the molecular weight distribution of the polyurethane obtained by using the polycarbonate diol according to the present invention, improving the mechanical properties of the polyurethane, and reducing the variation in mechanical properties.
The upper limit and the lower limit can be freely combined. For example, in the case where the content of the structural unit (2) contained in the polycarbonate diol is 80 ppm by mass or less in terms of nitrogen atoms with respect to the total mass of the polycarbonate diol, the content of the structural unit (2) is preferably 0.1 ppm by mass or more and 80 ppm by mass or less, more preferably 1 ppm by mass or more and 70 ppm by mass or less, still more preferably 2 ppm by mass or more and 60 ppm by mass or less, particularly preferably 5 ppm by mass or more and 50 ppm by mass or less, and most preferably 10 ppm by mass or more and 40 ppm by mass or less in terms of nitrogen atoms with respect to the total mass of the polycarbonate diol.
In the present invention, the content of the structural unit (2) in the polycarbonate diol is specifically the content measured by the method described in Examples to be described later.
In the polycarbonate diol according to the present invention, the specific method for controlling the content of the structural unit (2) in the polycarbonate diol within the above numerical range is not particularly limited, and those skilled in the art can appropriately optimize to control production conditions in a method for producing a polycarbonate diol according to the present invention to be described later based on well-known techniques.

<Aldehyde>

In the case where the content of the structural unit (2) in the polycarbonate diol according to the present invention is 80 ppm by mass or less in terms of nitrogen atoms, the larger the content of the structural unit (2), the more the generation of the aldehyde can be prevented, and therefore, the coloration prevention effect of the polycarbonate diol according to the present invention can be more remarkably obtained.
According to the investigations of the inventors of the present invention, a dihydroxy compound composition, which is a raw material for the polycarbonate diol, may contain an aldehyde for the reasons to be described later. When a polycarbonate diol is produced using a dihydroxy compound composition containing such an aldehyde, or when the obtained polycarbonate diol is stored for a long period of time, the aldehyde generates radicals by heating or oxidation, and an aldehyde group, a carboxylic acid, a double bond, and the like are generated in the dihydroxy compound or the polycarbonate diol. As a result, it is presumed that a conjugated structure is formed in the structure of the polycarbonate diol, and the polycarbonate diol is colored.
It is presumed that the structural unit (2) in the polycarbonate diol prevents the by-production of the aldehyde and the generation of aldehyde radicals, and can therefore prevent the coloration of the polycarbonate diol.
The aldehyde in the present invention is not particularly limited, and known aldehyde compounds and an aldehyde compound obtained by substituting the hydroxy group in the compound (1) with an aldehyde group can be used.
The aldehyde group can react with the hydroxy group to convert it into an acetal group. Therefore, the aldehyde in the present invention also includes an acetal compound obtained by substituting the aldehyde group in the aldehyde with an acetal group (hereinafter, may be simply referred to as an "acetal").
That is, the content of the aldehyde in the present invention means the total content of the aldehyde compound and an acetal modified product thereof, that is, the acetal.
Examples of the acetal include: an acetal compound (a) obtained by reacting the aldehyde group in the aldehyde with a hydroxy group to form an acetal group; an acetal compound (b) obtained by reacting two molecules in a monohydroxy compound with one aldehyde group in the aldehyde; an acetal compound (c) obtained by reacting one

molecule in a dihydroxy compound with one aldehyde group in the aldehyde; and a hemiacetal compound (d) obtained by reacting one molecule in a monohydroxy compound with one aldehyde group in the aldehyde.

The acetal may be one kind or two or more kinds.

Further, the aldehyde in the present invention includes both an aldehyde that is free in the polycarbonate diol according to the present invention and an aldehyde that is bonded to or associated with the polycarbonate diol in the polycarbonate diol or that is included in a part of the structure of the polycarbonate diol.

The form of the above "aldehyde that is bonded to or associated with the polycarbonate diol or that is included in a part of the structure of the polycarbonate diol" is not particularly limited, and examples thereof include a form in which a hydroxy group or an amino group contained in the aldehyde reacts to form a carbonate bond or a urethane bond in the polycarbonate diol.

The aldehyde is produced as a by-product in a hydrogenation reaction step when a carboxylic acid having 3 to 6 carbon atoms, which is a precursor of the compound (1), or an ester derivative of the carboxylic acid, is hydrogenated to produce the compound (1).

The kind of the "precursor of the compound (1)" is not particularly limited, and examples thereof include, in the compound represented by the general formula (Ia-1), the following:

in the case where n = 3, malonic acid or a malonic acid ester;
in the case where n = 4, succinic acid or a succinic acid ester;
in the case where n = 5, glutaric acid or a glutaric acid ester; and
in the case where n = 6 (the compound represented by the formula (Ib-1)), adipic acid or an adipic acid ester.

In the stage for producing the compound (1), examples of a method of increasing the amount of the aldehyde as a by-product include a method of reducing the amount of the catalyst used in the hydrogenation reaction, shortening the residence time, or excessively lowering the hydrogen pressure.

Conversely, in the stage for producing the compound (1), examples of a method of reducing the amount of the aldehyde as a by-product include a method of increasing the amount of the catalyst used in the hydrogenation reaction, increasing the residence time, or excessively increasing the hydrogen pressure.

The acetal requires a hydrogenation catalytic activity different from that of the aldehyde, and is therefore difficult to undergo a hydrogenation reaction with a hydrogenation catalyst for the aldehyde, and the acetal may remain in the compound (1).

In the production of the compound (1), the compound (1) is generally purified by distillation after the hydrogenation reaction step. In this distillation stage, the acetal produced as a by-product in the hydrogenation reaction step may decompose into an aldehyde, which may be mixed into the purified compound (1). In addition, the aldehyde may react with a hydroxy group to generate an acetal, which may be mixed into the compound (1).

In general, the aldehyde produced as a by-product in a process for producing a dihydroxy compound having a small number of carbon atoms can be relatively easily separated by distillation and purification. However, in the case where boiling points of the compound (1) and the aldehyde are close to each other and it is difficult to separate them as acetals, the aldehyde and the acetal tend to remain in the compound (1) even after distillation and purification.

The kind of the aldehyde in the present invention is not particularly limited, and examples thereof include, in the compound represented by the general formula (Ia-1), the following:

in the case where n = 3, monoaldehyde compounds such as 3-hydroxypropanal, and dialdehyde compounds such as malondialdehyde;
in the case where n = 4, monoaldehyde compounds such as 4-hydroxybutanal, and dialdehyde compounds such as succinaldehyde;
in the case where n = 5, monoaldehyde compounds such as 5-hydroxypentanal, and dialdehyde compounds such as glutaraldehyde; and
in the case where n = 6 (the compound represented by the formula (Ib-1)), monoaldehyde compounds such as 6-hydroxyhexanal, and dialdehyde compounds such as adipaldehyde.

In the case where the compound (1) is 1,6-hexanediol and derived from a biological raw material, particularly derived from a non-edible biomass such as glucose or xylose, the above 1,6-hexanediol may contain the above monoaldehyde compounds such as 6-hydroxyhexanal, and adipaldehyde.

<Content Ratio of Aldehyde>

The content ratio of the aldehyde contained in the polycarbonate diol according to the present invention refers to the content ratio of the aldehyde in the polycarbonate diol.

In the case where the polycarbonate diol contains the acetal, the content ratio of the aldehyde in the polycarbonate diol according to the present invention refers to the total content ratio of the aldehyde and the acetal in the polycarbonate diol.

In the case where the content of the structural unit (2) in the polycarbonate diol according to the present invention is 80 ppm by mass or less in terms of nitrogen atoms, the lower limit of the content ratio of the aldehyde contained in the polycarbonate diol is not particularly limited. The lower limit of the content ratio of the aldehyde is generally 1 ppm by mass, preferably 10 ppm by mass or more, more preferably 50 ppm by mass or more, still more preferably 100 ppm by mass or more, and particularly preferably 170 ppm by mass or more with respect to the total mass of the polycarbonate diol, from the economic viewpoint of reducing the amount of the aldehyde. On the other hand, the upper limit of the content ratio of the aldehyde is not particularly limited. The upper limit of the content ratio of the aldehyde is generally 630 ppm by mass or less, preferably 600 ppm by mass or less, more preferably 500 ppm by mass or less, still more preferably 450 ppm by mass or less, and particularly preferably 400 ppm by mass or less with respect to the total mass of the polycarbonate diol, from the viewpoint of effectively obtaining the coloration prevention effect of the structural unit (2).

The upper limit and the lower limit can be freely combined. In the case where the content of the structural unit (2) in the polycarbonate diol according to the present invention is 80 ppm by mass or less in terms of nitrogen atoms, for example, the content ratio of the aldehyde contained in the polycarbonate diol according to the present invention is generally 1 ppm by mass or more and 630 ppm by mass or less, preferably 10 ppm by mass or more and 600 ppm by mass or less, more preferably 50 ppm by mass or more and 500 ppm by mass or less, still more preferably 100 ppm by mass or more and 450 ppm by mass or less, and particularly preferably 170 ppm by mass or more and 400 ppm by mass or less with respect to the total mass of the polycarbonate diol.

Note that, as described above, the aldehyde in the polycarbonate diol according to the present invention includes both an aldehyde that is free in the polycarbonate diol according to the present invention and an aldehyde that is bonded to or associated with the polycarbonate diol in the polycarbonate diol or that is included in a part of the structure of the polycarbonate diol. In the case where the aldehyde is contained in a state free from the polycarbonate diol, the polycarbonate diol according to the present invention is also referred to as a polycarbonate diol composition containing a polycarbonate diol and an aldehyde. Since the content of the free aldehyde in the polycarbonate diol according to the present invention is a trace amount in unit of ppm by mass as described above, in the present invention, the term "polycarbonate diol" includes a polycarbonate diol containing a free aldehyde.

The content of the aldehyde in the polycarbonate diol according to the present invention is measured by the method described in Examples to be described later.

In the polycarbonate diol according to the present invention, the specific method for controlling the content ratio of the aldehyde in the polycarbonate diol within the above numerical range is not particularly limited, and those skilled in the art can appropriately optimize to control production conditions in a method for producing a polycarbonate diol according to the present invention to be described later based on well-known techniques.

(Structural Unit (3))

As described above, the polycarbonate diol according to the present invention can contain a structural unit (3) derived from a dihydroxy compound (3) other than the compound (1), if necessary, within a range that does not impair the effects of the present invention.

Specifically, examples of the dihydroxy compound (3) other than the compound (1) include a dihydroxy compound (4) (hereinafter, may be referred to as a "compound (4)") to be described later and a dihydroxy compound (5) (hereinafter, may be referred to as a "compound (5)") to be described later.

(Compound (4))

In the polycarbonate diol according to the present invention, the polycarbonate diol can contain a structural unit (4) derived from the compound (4) represented by the following general formula (4).

$$HO\text{-}R^3\text{-}OH \qquad (4)$$

(In the general formula (4), $R^3$ represents a divalent alkylene group having 3 to 20 carbon atoms which may have a substituent. However, the compound (4) represented by the general formula (4) does not include the compound (1) represented by the general formula (I-1).)

In the general formula (4), $R^3$ represents a divalent alkylene group having 3 to 20 carbon atoms which may have a substituent.

The structural unit (4) derived from the compound represented by the general formula (4) is represented, for example, by the following general formula (4').

[Chem. 21]

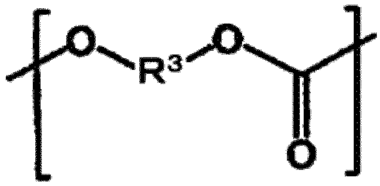

(4')

In the general formula (4), $R^3$ may be one kind of a group or a plurality of kinds of groups. In the general formula (4), $R^3$ is a divalent alkylene group having 3 to 20 carbon atoms which may have a substituent. The carbon atom in the main chain constituting the alkylene group represented by $R^3$ is preferably a secondary, tertiary or quaternary carbon atom, and more preferably a secondary carbon atom, in order to improve the flexibility, the low-temperature properties, the chemical resistance, and the heat resistance.

In the polycarbonate diol according to the present invention, when an aliphatic dihydroxy compound having no aromatic ring structure in the molecular structure, such as the compound (4), is used, the polycarbonate diol can be excellent in handleability, and the obtained polyurethane can be excellent in flexibility and chemical resistance.

The lower limit of the content ratio of the structural unit (4) in the polycarbonate diol according to the present invention is not particularly limited. The lower limit of the content ratio of the structural unit (4) is preferably 5 mass% or more, more preferably 10 mass% or more, and still more preferably 25 mass% or more with respect to 100%, i.e., the total mass of the polycarbonate diol, from the viewpoint of improving the handleability of the polycarbonate diol and the flexibility and the chemical resistance of the obtained polyurethane. On the other hand, the upper limit of the content ratio of the structural unit (4) is not particularly limited. The upper limit of the content ratio of the structural unit (4) is preferably 95 mass% or less, more preferably 75 mass% or less, and still more preferably 50 mass% or less with respect to 100%, i.e., the total mass of the polycarbonate diol, from the viewpoint of maintaining good handleability of the polycarbonate diol and maintaining good flexibility and low-temperature properties of the obtained polyurethane.

The upper limit and the lower limit can be freely combined. For example, in the polycarbonate diol according to the present invention, the content ratio of the structural unit (4) is preferably 5 mass% or more and 95 mass% or less, more preferably 10 mass% or more and 75 mass% or less, and still more preferably 25 mass% or more and 50 mass% or less with respect to 100%, i.e., the total mass of the polycarbonate diol.

In the polycarbonate diol according to the present invention, the compound (4) is not particularly limited, and examples thereof include 2-methyl-1,3-propanediol, 2,2-dimethyl-1,3-propanediol, 1,3-butanediol, 2-methyl-1,4-butanediol, 2-methyl-1,8-octanediol, and 1,12-octadecanediol. Among them, preferred is at least one compound selected from the group consisting of 2-methyl-1,3-propanediol, 2,2-dimethyl-1,3-propanediol, 1,3-butanediol, and 2-methyl-1,4-butanediol, in order to obtain an excellent balance of flexibility, low-temperature properties, and chemical resistance of the obtained polyurethane.

These compounds (4) may be used alone or in combination of two or more kinds thereof.

(Compound (5))

In the polycarbonate diol according to the present invention, the polycarbonate diol can contain a structural unit (5) derived from a compound (5) having a moiety represented by the following general formula (5) in a part of the structure.

$$-(CH_2\text{-}O)- \qquad (5)$$

(However, this excludes a case where the moiety represented by the general formula (5) is a part of $-CH_2\text{-}O\text{-}H$.)

In the polycarbonate diol according to the present invention, when a dihydroxy compound having the moiety represented by the structural unit (5) in a part of the structure, such as the compound (5), is used, the polycarbonate diol can be excellent in handleability, and the obtained polyurethane can be excellent in flexibility and low-temperature properties.

The lower limit of the content ratio of the structural unit (5) in the polycarbonate diol according to the present invention is not particularly limited. The lower limit of the content ratio of the structural unit (5) is preferably 5 mass% or more, more preferably 10 mass% or more, and still more preferably 25 mass% or more with respect to 100%, i.e., the total mass of the polycarbonate diol, from the viewpoint of improving the handleability of the polycarbonate diol and the flexibility and the low-temperature properties of the obtained polyurethane. On the other hand, the upper limit of the content ratio of the structural unit (5) is not particularly limited. The upper limit of the content ratio of the structural unit (5) is preferably 95 mass% or less, more preferably 75 mass% or less, and still more preferably 50 mass% or less with respect to 100%, i.e., the total mass of the polycarbonate diol, from the viewpoint of maintaining good handleability of the polycarbonate diol and

maintaining good heat resistance and strength of the obtained polyurethane.

The upper limit and the lower limit can be freely combined. For example, in the polycarbonate diol according to the present invention, the content ratio the content ratio of the structural unit (5) is preferably 5 mass% or more and 95 mass% or less, more preferably 10 mass% or more and 75 mass% or less, and still more preferably 25 mass% or more and 50 mass% or less with respect to 100%, i.e., the total mass of the polycarbonate diol.

In the polycarbonate diol according to the present invention, the compound (5) is not particularly limited. Examples of the compound (5) include: oxyalkylene glycols such as diethylene glycol, triethylene glycol, tetraethylene glycol, and polyethylene glycol; a compound having an aromatic group in the side chain and an ether group bonded to the aromatic group in the main chain, such as 9,9-bis(4-(2-hydroxyethoxy)phenyl)fluorene, 9,9-bis(4-(2-hydroxyethoxy)-3-methylphenyl)fluorene, 9,9-bis(4-(2-hydroxyethoxy)-3-isopropylphenyl)fluorene, 9,9-bis(4-(2-hydroxyethoxy)-3-isobutylphenyl)fluorene, 9,9-bis(4-(2-hydroxyethoxy)-3-tert-butylphenyl)fluorene, 9,9-bis(4-(2-hydroxyethoxy)-3-eyelohexylphenyl)fluorene, 9,9-bis(4-(2-hydroxyethoxy)-3-phenylphenyl)fluorene, 9,9-bis(4-(2-hydroxyethoxy)-3,5-dimethylphenyl)fluorene, 9,9-bis(4-(2-hydroxyethoxy)-3-tert-butyl-6-methylphenyl)fluorene, and 9,9-bis(4-(3-hydroxy-2,2-dimethylpropoxy)phenyl)fluorene; anhydrous sugar alcohols typified by a dihydroxy compound represented by the following formula (6); and a compound having a cyclic ether structure represented by the following formula (7), such as spiroglycol.

These compounds (5) may be used alone or in combination of two or more kinds thereof.

[Chem. 22]

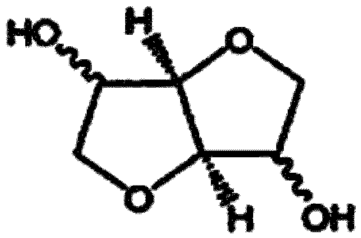

(6)

[Chem. 23]

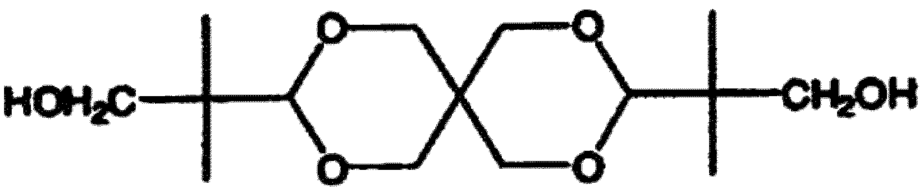

(7)

Among these compounds (5), it is preferable to use a dihydroxy compound having no aromatic ring structure from the viewpoint of light resistance of the obtained polyurethane.

Specifically, examples of the anhydrous sugar alcohols typified by the dihydroxy compound represented by the formula (6) include at least one selected from isosorbide, isomannide, and isoidide, which are stereoisomers. These may be used alone or in combination of two or more kinds thereof. Among them, isosorbide, which is obtained by dehydration and condensation of sorbitol produced from various starches abundant and easily available as plant-derived resources, is most preferred from the viewpoint of availability and ease of production, light resistance, optical properties, moldability, heat resistance, and achievement of the sustainable development goals (SDGs).

[Method for Producing Polycarbonate Diol]

The method for producing a polycarbonate diol according to the present invention is not particularly limited, and a known method for producing a polycarbonate diol can be used, as described in, for example, Schnell, Polymer Reviews, Vol. 9, pp. 9-20 (1994) and WO 2015/199070.

Examples of a specific embodiment of the method for producing a polycarbonate diol according to the present invention include a method for producing a polycarbonate diol including polycondensing an amine, a dihydroxy compound composition to be described later, and a carbonate compound to be described later by a transesterification reaction in the presence of a catalyst to be described later, to obtain a polycarbonate diol containing a structural unit (2) represented by the following general formula (II).

[Chem. 24]

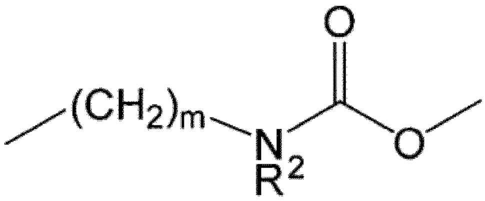

( II )

(In the general formula (II), m is an integer of 2 to 20. $R^2$ represents an alkyl group having 1 to 20 carbon atoms, which may have a substituent, or a hydrogen atom.)

The structural unit (2) in the method for producing a polycarbonate diol according to the present invention is treated as having the same meaning as the structural unit (2) mentioned in the description of the polycarbonate diol according to the present invention.

The polycarbonate diol obtained by the method for producing a polycarbonate diol according to the present invention can further contain a structural unit (1) represented by the following general formula (I).

[Chem. 25]

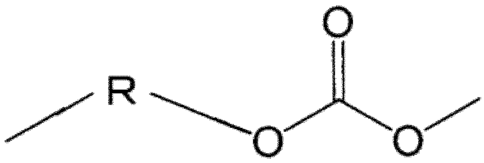

( I )

(In the general formula (I), R is a hydrocarbon group having 2 to 20 carbon atoms, which may have a substituent or a hetero atom.)

The structural unit (1) in the method for producing a polycarbonate diol according to the present invention is treated as having the same meaning as the structural unit (1) mentioned in the description of the polycarbonate diol according to the present invention.

In the method for producing a polycarbonate diol according to the present invention, the structural unit (1) preferably contains a structural unit represented by the following general formula (Ii), from the viewpoint of further improving the mechanical properties and the chemical resistance of the obtained polyurethane.

[Chem. 26]

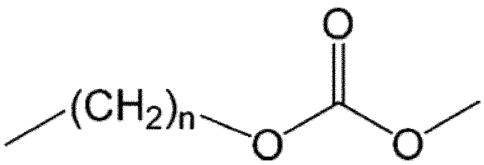

( Ia )

(In the general formula (Ia), n is an integer of 2 to 20.)

The structural unit represented by the formula (Ia) in the method for producing a polycarbonate diol according to the present invention is treated as having the same meaning as the structural unit represented by the formula (Ia) mentioned in the description of the polycarbonate diol according to the present invention.

In the method for producing a polycarbonate diol according to the present invention, the structural unit (1) can contain a structural unit represented by the following general formula (Ib), from the viewpoint of further improving the mechanical properties and the chemical resistance of the obtained polyurethane.

[Chem. 27]

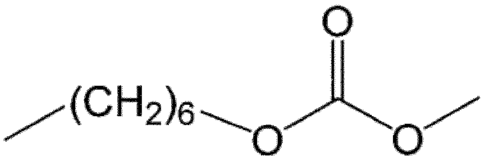

( Ib)

<Dihydroxy Compound Composition>

Examples of the dihydroxy compound composition include a composition containing a dihydroxy compound (1) represented by the following general formula (I-1) (also referred to simply as a "compound (1)" in the present description).
[Chem. 28]

HO-R-OH (I-1)

(In the general formula (I-1), R is a hydrocarbon group having 2 to 20 carbon atoms, which may have a substituent or a hetero atom.)

The compound (1) represented by the general formula (I-1) in the method for producing a polycarbonate diol according to the present invention is treated as having the same meaning as the compound (1) mentioned in the description of the polycarbonate diol according to the present invention.

The compound (1) may be used alone or in combination of two or more kinds thereof.

The compound (1) in the method for producing a polycarbonate diol according to the present invention is not particularly limited, and compounds same as the compound (1) mentioned in the description of the polycarbonate diol according to the present invention can be used. Hereinafter, the compound (1) in the method for producing a polycarbonate diol according to the present invention is treated as having the same meaning as the compound (1) in the polycarbonate diol according to the present invention.

Further, in the method for producing a polycarbonate diol according to the present invention, the compound (1) can include a compound represented by the following general formula (Ia-1).
[Chem. 29]

$HO-(CH_2)_n-OH$ (Ia-1)

(In the general formula (Ia-1), n is an integer of 2 to 20.)

The compound represented by the general formula (Ia-1) in the method for producing a polycarbonate diol according to the present invention is treated as having the same meaning as the compound represented by the general formula (Ia-1) mentioned in the description of the polycarbonate diol according to the present invention.

In this case, the content ratio of the compound represented by the general formula (Ia-1) in the compound (1) is not particularly limited, and is preferably 10 mass% or more, more preferably 30 mass% or more, still more preferably 50 mass% or more, and particularly preferably 70 mass% or more with respect to 100%, i.e., the total mass of the compound (1), from the viewpoint of improving the handleability of the polycarbonate diol and the flexibility and the low-temperature properties of the obtained polyurethane. This content ratio may be 90 mass% or more. On the other hand, the upper limit of the content ratio of the compound represented by the general formula (Ia-1) in the compound (1) is not particularly limited, and may be 100 mass%, or alternatively, can be 99 mass% or less with respect to 100%, i.e., the total mass of the compound (1).

In the method for producing a polycarbonate diol according to the present invention, the compound (1) can contain, if necessary, a compound represented by the following general formula (Ib-1), that is, 1,6-hexanediol.
[Chem. 30]

$HO-(CH_2)_6-OH$ (Ib-1)

(Amine)

The amine in the method for producing a polycarbonate diol according to the present invention can be treated as having the same meaning as the amine forming the structural unit (2) mentioned in the description of the polycarbonate diol according to the present invention.

Further, as the amine in the method for producing a polycarbonate diol according to the present invention, the amines mentioned in the first embodiment, the second embodiment, the third embodiment, and the fourth embodiment mentioned in the description of the polycarbonate diol according to the present invention can be used.

In the method for producing a polycarbonate diol according to the present invention, the upper limit of the content ratio of the amine in the dihydroxy compound composition is preferably 1,500 ppm by mass or less in terms of nitrogen atoms with respect to the total mass of the dihydroxy compound composition, from the viewpoint of preventing the coloration of the obtained polycarbonate diol to improve the color tone, and improving the yield during polymerization of the polycarbonate diol. As the content ratio of the amine is larger, depending on the conditions for producing the polycarbonate diol, the amine may inhibit the catalytic action or exhibit a coloring action, thereby impairing the yield and the color tone of the polycarbonate diol. The upper limit of the content ratio of the amine is more preferably 1,400 ppm by mass or less, still more preferably 1,200 ppm by mass or less, particularly preferably 1,000 ppm by mass or less, and especially preferably 500 ppm by mass or less, in terms of nitrogen atoms.

On the other hand, the lower limit of the content ratio of the amine is not particularly limited. The lower limit of the content ratio of the amine is generally preferably 1 ppm by mass or more, more preferably 10 ppm by mass or more, still more preferably 50 ppm by mass or more, particularly preferably 100 ppm by mass or more, and especially preferably 200 ppm by mass or more in terms of nitrogen atoms with respect to the total mass% of the dihydroxy compound composition, from the economic viewpoint, and from the viewpoint of moderately increasing the molecular weight distribution of the polyurethane obtained by using the polycarbonate diol according to the present invention, improving the mechanical properties of the polyurethane, and reducing the variation in mechanical properties.

The upper limit and the lower limit can be freely combined. For example, the content ratio of the amine contained in the dihydroxy compound composition in the method for producing a polycarbonate diol according to the present invention is preferably 1 ppm by mass or more and 1,500 ppm by mass or less, more preferably 10 ppm by mass or more and 1,400 ppm by mass or less, still more preferably 50 ppm by mass or more and 1,200 ppm by mass or less, particularly preferably 100 ppm by mass or more and 1,000 ppm by mass or less, and especially preferably 200 ppm by mass or more and 500 ppm by mass or less in terms of nitrogen atoms with respect to the total mass of the dihydroxy compound composition.

Note that, in the method for producing a polycarbonate diol according to the present invention, in the case where the upper limit of the content ratio of the amine contained in the dihydroxy compound composition is 100 ppm by mass or less in terms of nitrogen atoms with respect to the total mass of the dihydroxy compound composition, the larger the content ratio of the amine, the more the coloration of the obtained polycarbonate diol can be prevented and the better the color tone can be controlled.

When the content ratio of the amine contained in the dihydroxy compound composition is more than 100 ppm by mass in terms of nitrogen atoms, the amine may inhibit the catalytic action or exhibit a coloring action, and thereby the yield and the color tone of the polycarbonate diol tend to be impaired. The upper limit of the content ratio of the amine is preferably 90 ppm by mass or less, more preferably 80 ppm by mass or less, still more preferably 70 ppm by mass or less, and most preferably 60 ppm by mass or less, in terms of nitrogen atoms. On the other hand, the lower limit of the content ratio of the amine is not particularly limited, and is generally preferably 0.1 ppm by mass or more, more preferably 1 ppm by mass or more, still more preferably 2 ppm by mass or more, particularly preferably 5 ppm by mass or more, and most preferably 10 ppm by mass or more in terms of nitrogen atoms with respect to the total mass% of the dihydroxy compound composition, from the economic viewpoint.

The upper limit and the lower limit can be freely combined. For example, in the method for producing a polycarbonate diol according to the present invention, in the case where the content of the amine contained in the dihydroxy compound composition is 100 ppm by mass or less in terms of nitrogen atoms with respect to the total mass of the dihydroxy compound composition, the content ratio of the amine contained in the dihydroxy compound composition is preferably 0.1 ppm by mass or more and 100 ppm by mass or less, more preferably 1 ppm by mass or more and 90 ppm by mass or less, still more preferably 2 ppm by mass or more and 80 ppm by mass or less, particularly preferably 5 ppm by mass or more and 70 ppm by mass or less, and most preferably 10 ppm by mass or more and 60 ppm by mass or less in terms of nitrogen atoms with respect to the total mass of the dihydroxy compound composition.

The method for controlling the content ratio of the amine in the dihydroxy compound composition is not particularly limited. As described above, for example, when a biomass resource such as sugar is used as a raw material and is fermented with bacterial cells to obtain the compound (1), the amine is produced as a by-product, which can thus be controlled by adjusting the kind of bacterial cells, the fermentation time, the distillation and purification conditions, and the like

<Aldehyde>

In the method for producing a polycarbonate diol according to the present invention, in the case where the content ratio of the amine contained in the dihydroxy compound composition is 100 ppm by mass or less in terms of nitrogen atoms,

due to the reasons to be described later, the larger the content of the amine, the more the generation of the aldehyde in the dihydroxy compound composition can be prevented, and therefore, the effect of preventing the coloration of the obtained polycarbonate diol can be more remarkably obtained.

As described above, according to the investigations of the inventors of the present invention, a dihydroxy compound composition, which is a raw material for the polycarbonate diol, may contain an aldehyde for the above reasons. When a polycarbonate diol is produced using such a dihydroxy compound composition, or when the obtained polycarbonate diol is stored for a long period of time, the aldehyde generates radicals by heating or oxidation, and an aldehyde group, a carboxylic acid, a double bond, and the like are generated in the dihydroxy compound or the polycarbonate diol. As a result, it is presumed that a conjugated structure is formed in the structure of the polycarbonate diol, and the polycarbonate diol is colored.

It is presumed that the amine in the dihydroxy compound composition prevents the by-production of the aldehyde or the generation of aldehyde radicals, and can therefore prevent the coloration of the obtained polycarbonate diol.

The aldehyde in the method for producing a polycarbonate diol according to the present invention can be treated as having the same meaning as the aldehyde mentioned in the description of the polycarbonate diol according to the present invention. That is, the above aldehyde compound and the acetal as an acetal modified product thereof are referred to as an "aldehyde".

In the method for producing a polycarbonate diol according to the present invention, in the case where the content ratio of the amine contained in the dihydroxy compound composition is 100 ppm by mass or less in terms of nitrogen atoms, the upper limit of the content ratio of the aldehyde in the dihydroxy compound composition is not particularly limited. The upper limit of the content ratio of the aldehyde is 980 ppm by mass or less, preferably 950 ppm by mass or less, more preferably 900 ppm by mass or less, still more preferably 850 ppm by mass or less, and particularly preferably 800 ppm by mass or less with respect to the total mass of the dihydroxy compound composition, from the viewpoint of obtaining sufficient effects of the amine. On the other hand, the lower limit of the content ratio is not particularly limited. The lower limit of the content ratio of the aldehyde is generally 1 ppm by mass or more, preferably 10 ppm by mass or more, more preferably 50 ppm by mass or more, still more preferably 100 ppm by mass or more, and particularly preferably 200 ppm by mass or more with respect to the total mass of the dihydroxy compound composition, from the economic viewpoint.

The upper limit and the lower limit can be freely combined. For example, in the method for producing a polycarbonate diol according to the present invention, in the case where the content ratio of the amine contained in the dihydroxy compound composition is 100 ppm by mass or less in terms of nitrogen atoms, the content ratio of the aldehyde contained in the dihydroxy compound composition is generally 1 ppm by mass or more and 980 ppm by mass or less, preferably 10 ppm by mass or more and 950 ppm by mass or less, more preferably 50 ppm by mass or more and 900 ppm by mass or less, still more preferably 100 ppm by mass or more and 850 ppm by mass or less, and particularly preferably 200 ppm by mass or more and 800 ppm by mass or less with respect to the total mass of the dihydroxy compound composition.

The method for controlling the content ratio of the aldehyde in the dihydroxy compound composition is not particularly limited. For example, when the compound (1) is obtained by subjecting a carboxylic acid or a carboxylic acid ester to a hydrogenation reaction, the content ratio can be controlled by adjusting a conversion rate of the carboxylic acid or the carboxylic acid ester in the hydrogenation reaction step.

For example, in the stage for producing the dihydroxy compound composition, the larger the conversion rate, the smaller the content ratio of the aldehyde in the obtained dihydroxy compound composition. Therefore, examples of the method of reducing the content ratio of the aldehyde include a method of increasing the conversion rate.

On the other hand, the content ratio of the aldehyde in the dihydroxy compound composition increases by oxidation. Therefore, in the stage for producing the dihydroxy compound composition, examples of the method of increasing the content ratio of the aldehyde include a method of increasing the content ratio of the aldehyde to a desired value by heating the dihydroxy compound composition in a raw material tank or the like in the presence of oxygen.

In the stage for producing the dihydroxy compound composition, in order to reduce the content ratio of the aldehyde, methods that can be used include increasing the amount of the catalyst used in the hydrogenation reaction of the carboxylic acid or the carboxylic acid ester that is a raw material for the dihydroxy compound, increasing the residence time, or excessively increasing the hydrogen pressure. However, this method places a large burden on the production stage and is not easy. In addition, the acetal requires a hydrogenation catalytic activity different from that of the aldehyde, and is therefore difficult to undergo a hydrogenation reaction with a hydrogenation catalyst for the aldehyde, and the acetal remains in the compound (1).

Further, after the hydrogenation reaction step, die compound (1) can be subjected to distillation and purification by distillation. At this time, the acetal produced as a by-product in the hydrogenation reaction step in the distillation stage may decompose into an aldehyde, which may be mixed into the purified compound (1). In addition, the aldehyde may react with a hydroxy group to generate an acetal, which may be mixed into the compound (1).

In general, the aldehyde in the dihydroxy compound composition having a small number of carbon atoms can be relatively easily separated by distillation and purification. However, in the case where boiling points of the compound (1)

and the aldehyde are close to each other and it is difficult to separate them as acetals, the aldehyde and the acetal tend to remain in the compound (1).

(Content Ratio of Structural Unit (2) in Polycarbonate Diol)

In the method for producing a polycarbonate diol according to the present invention, the upper limit of the content ratio of the structural unit (2) derived from the amine contained in the obtained polycarbonate diol is preferably 1,200 ppm by mass or less, more preferably 1,000 ppm by mass or less, still more preferably 900 ppm by mass or less, particularly preferably 700 ppm by mass or less, and especially preferably 500 ppm by mass or less in terms of nitrogen atoms with respect to the total mass of the polycarbonate diol, for the reasons same as the reasons described for the polycarbonate diol according to the present invention.

On the other hand, the lower limit of the content ratio of the structural unit (2) is preferably 1 ppm by mass or more, more preferably 10 ppm by mass or more, still more preferably 50 ppm by mass or more, particularly preferably 100 ppm by mass or more, and especially preferably 150 ppm by mass or more in terms of nitrogen atoms with respect to the total mass of the polycarbonate diol, for the reasons same as the reasons described for the polycarbonate diol according to the present invention.

The upper limit and the lower limit can be freely combined. For example, in the method for producing a polycarbonate diol according to the present invention, the content ratio of the structural unit (2) contained in the obtained polycarbonate diol is preferably 1 ppm by mass or more and 1,200 ppm by mass or less, more preferably 10 ppm by mass or more and 1,000 ppm by mass or less, still more preferably 50 ppm by mass or more and 900 ppm by mass or less, particularly preferably 100 ppm by mass or more and 700 ppm by mass or less, and especially preferably 150 ppm by mass or more and 500 ppm by mass or less in terms of nitrogen atoms with respect to the total mass of the polycarbonate diol.

In the method for producing a polycarbonate diol according to the present invention, in the case where the content ratio of the amine contained in the dihydroxy compound composition is 100 ppm by mass or less in terms of nitrogen atoms, the upper limit of the content of the structural unit (2) in the obtained polycarbonate diol is generally 80 ppm by mass or less, preferably 70 ppm by mass or less, more preferably 60 ppm by mass or less, still more preferably 50 ppm by mass or less, and most preferably 40 ppm by mass or less in terms of nitrogen atoms with respect to the total mass of the polycarbonate diol, for the reasons same as the reasons described for the polycarbonate diol according to the present invention.

On the other hand, the lower limit of the content of the structural unit (2) is preferably 0.1 ppm by mass or more, more preferably 1 ppm by mass or more, still more preferably 2 ppm by mass or more, particularly preferably 5 ppm by mass or more, and most preferably 10 ppm by mass or more in terms of nitrogen atoms with respect to the total mass of the polycarbonate diol, for the reasons same as the reasons described for the polycarbonate diol according to the present invention.

The upper limit and the lower limit can be freely combined. For example, in the method for producing a polycarbonate diol according to the present invention, the content of the structural unit (2) contained in the obtained polycarbonate diol is preferably 0.1 ppm by mass or more and 80 ppm by mass or less, more preferably 1 ppm by mass or more and 70 ppm by mass or less, still more preferably 2 ppm by mass or more and 60 ppm by mass or less, particularly preferably 5 ppm by mass or more and 50 ppm by mass or less, and most preferably 10 ppm by mass or more and 40 ppm by mass or less in terms of nitrogen atoms with respect to the total mass of the polycarbonate diol.

Further, in the method for producing a polycarbonate diol according to the present invention, in the case where the content ratio of the amine contained in the dihydroxy compound composition is 100 ppm by mass or less in terms of nitrogen atoms, the larger the content of the amine in the obtained polycarbonate diol, the more the generation of the aldehyde in the dihydroxy compound composition can be prevented for the above reasons. Further, since the generation of the aldehyde can be further prevented, the effect of preventing the coloration of the obtained polycarbonate diol can be more remarkably obtained.

In addition, in the method for producing a polycarbonate diol according to the present invention, the lower limit and the upper limit of the content ratio of the aldehyde in the obtained polycarbonate diol are the same as the lower limit and the upper limit of the content ratio of the aldehyde in the polycarbonate diol according to the present invention, respectively.

(Molecular Weight of Polycarbonate Diol)

In the method for producing a polycarbonate diol according to the present invention, the number average molecular weight of the obtained polycarbonate diol is preferably 250 or more and 5,000 or less, more preferably 300 or more and 4,000 or less, and still more preferably 400 or more and 3,000 or less, for the reasons same as the reasons described for the polycarbonate diol according to the present invention.

(Compound (4) and Compound (5))

Further, in the method for producing a polycarbonate diol according to the present invention, the dihydroxy compound composition preferably further contains at least one of a compound (4) represented by the following general formula (4) and a compound (5) having a moiety represented by the following general formula (5) in a part of the structure, for the reasons same as the reasons described for the polycarbonate diol according to the present invention.

$$HO\text{-}R^3\text{-}OH \qquad (4)$$

(In the general formula (4), $R^3$ represents a divalent alkylene group having 3 to 20 carbon atoms which may have a substituent. However, the compound (4) represented by the general formula (4) does not include the compound (1) represented by the general formula (I-1).)

$$\text{-}(CH_2\text{-}O)\text{-} \qquad (5)$$

(However, this excludes a case where the moiety represented by the general formula (5) is a part of $-CH_2-O-H$.)

The compound (4) and the compound (5) in the method for producing a polycarbonate diol according to the present invention are treated as having the same meaning as the compound (4) and the compound (5) mentioned in the description of the polycarbonate diol according to the present invention, respectively.

In the method for producing a polycarbonate diol according to the present invention, the compound (5) is preferably at least one selected from isosorbide, isomannide, and isoidide, for the reasons same as the reasons described for the polycarbonate diol according to the present invention.

In the method for producing a polycarbonate diol according to the present invention, the lower limits and the upper limits of the content ratios of the structural unit (4) and the structural unit (5) in the obtained polycarbonate diol are the same as the lower limits and the upper limits of the content ratios of the structural unit (4) and the structural unit (5) in the polycarbonate diol according to the present invention, respectively.

<Carbonate Compound>

A carbonate compound (may be referred to as a "carbonic acid diester") that can be used in the method for producing a polycarbonate diol according to the present invention is not particularly limited as long as it does not impair the effects of the present invention. Examples of the carbonate compound that can be used include known carbonate compounds used in the synthesis of a polycarbonate diol, such as a dialkyl carbonate, a diaryl carbonate, or an alkylene carbonate. The carbonate compound to be used can be appropriately selected by those skilled in the art depending on the use of the polycarbonate diol, the production conditions, and the like. For example, the carbonate compound is preferably a diaryl carbonate from the viewpoint of the reactivity between the dihydroxy compound and the carbonate compound, and the carbonate compound is preferably a dialkyl carbonate or an alkylene carbonate from the economic viewpoint.

Specific examples of the carbonate compound include dimethyl carbonate, diethyl carbonate, dibutyl carbonate, diphenyl carbonate, and ethylene carbonate.

The amount of the carbonate compound to be used is not particularly limited, and for example, the conditions described in WO 2015/199070 can be appropriately optimized and used by those skilled in the art according to known techniques.

<Catalyst>

In the method for producing a polycarbonate diol according to the present invention, when polycondensing a dihydroxy compound composition and a carbonate compound by a transesterification reaction to obtain a polycarbonate diol, as a catalyst for promoting the transesterification reaction, a known transesterification catalyst (hereinafter may be referred to as a "catalyst") used in the synthesis of a polycarbonate diol can be used.

In this case, when the catalyst remains in the obtained polycarbonate diol in an excessive amount, in production of a polyurethane by using the polycarbonate diol, the catalyst may inhibit the reaction or excessively accelerate the reaction.

The kind of the catalyst and the amount of the catalyst remaining in the polycarbonate diol are not particularly limited. As the catalyst, for example, the conditions described in WO 2015/199070 can be appropriately optimized and used by those skilled in the art according to known techniques.

<Catalyst Deactivator>

As described above, in the case of using a catalyst during the polymerization reaction, the catalyst generally remains in the obtained polycarbonate diol, and due to the remaining catalyst, a rise in molecular weight, a change in composition, and the like may occur when the polycarbonate diol is heated, or a polyuredianization reaction may not be controlled. In order to prevent the influence of the remaining catalyst, if necessary, the transesterification catalyst can be deactivated by adding, for example, a catalyst deactivator such as a phosphorus-based compound in a substantially equimolar amount to the transesterification catalyst used. Further, after the addition, by applying a heat treatment and the like, the transesterification catalyst can be efficiently deactivated.

The kind and the amount of the catalyst deactivator to be used. and the conditions in the heat treatment are not particularly limited. As the catalyst deactivator, for example, the conditions described in WO 2015/199070 can be appropriately optimized and used by those skilled in the art according to known techniques.

[Polyurethane]

A polyurethane according to the present invention is a polyurethane produced using the polycarbonate diol according to the present invention.

A method for producing the polyurethane according to the present invention is not particularly limited. As the method for producing the polyurethane according to the present invention, for example, known polyurethane reaction conditions described in WO 2015/016261, WO 2018/088575, and the like can be appropriately optimized and used by those skilled in the art according to known techniques.

For example, the polyurethane according to the present invention can be produced by reacting the polycarbonate diol according to the present invention with a polyol other than the polycarbonate diol according to the present invention, which is used if necessary, a polyisocyanate to be described later, and a chain extender to be described later, which is further used if necessary, at a temperature in the range of room temperature to 200°C.

In the case of using a chain extender, the chain extender may be added from the beginning of the reaction or during the reaction. For example, the polyurethane according to the present invention can be produced by first reacting the polycarbonate diol according to the present invention with an excess of polyisocyanate to produce a prepolymer having an isocyanate group at the terminal, and then adding a chain extender to react with the prepolymer to increase the degree of polymerization of the polymer.

<Polyisocyanate>

As the polyisocyanate used in the production of the polyurethane according to the present invention, any known polyisocyanate for use in the production of a polyurethane can be used.

The polyisocyanate is not particularly limited. For example, various aliphatic, alicyclic, or aromatic polyisocyanate compounds described in WO 2015/016261 and WO 2018/088575 can be used.

Specifically, examples thereof include: known aliphatic diisocyanates such as tetramethylene diisocyanate, pentamethylene diisocyanate, hexamethylene diisocyanate, and 2,2,4-trimethylhexamethylene diisocyanate; known alicyclic diisocyanates such as 1,4-cyclohexane diisocyanate, isophorone diisocyanate, 4,4'-dicyclohexylmethane diisocyanate, and 1,3-bis(isocyanatomethyl)cyclohexane; and known aromatic diisocyanates such as xylylene diisocyanate, 4,4'-diphenyl diisocyanate, m-phenylene diisocyanate, p-phenylene diisocyanate, 4,4'-diphenylmethane diisocyanate, and 4,4'-diphenyldimethylmethane diisocyanate. These may be used alone or in combination of two or more kinds thereof.

Among them, in view of a preferred balance of physical properties of the obtained polyurethane and mass availability at a low cost in industry, 4,4'-diphenylmethane diisocyanate, hexamethylene diisocyanate, 4,4'-dicyclohexylmethane diisocyanate, and isophorone diisocyanate are preferred.

<Chain Extender>

As the chain extender used in the production of the polyurethane according to the present invention, any known chain extender for use in the production of a polyurethane can be used.

The chain extender is not particularly limited. Examples of the chain extender include low molecular weight polyols, amines, water, and the like described in WO 2015/016261 and WO 2018/088575.

Specifically, examples thereof include: linear diols such as ethylene glycol, 1,3-propanediol, 1,4-butanediol, 1,5-pentanediol, 1,6-hexanediol, 1,8-octanediol, 1,9-nonanediol, 1,10-decanediol, and 1,12-dodecanediol; branched chain diols such as 2-methyl-1,3-propanediol and 2,2-dimethyl-1,3-propanediol; diols having an ether group, such as diethylene glycol and propylene glycol; diols having an alicyclic structure, such as 1,4-cyclohexanediol, 1,4-cyclohexanedimethanol,

and 1,4-dihydroxyethylcyclohexane; diols having an aromatic group, such as xylylene glycol, 1,4-dihydroxyethylbenzene, and 4,4'-methylenebis(hydroxyethylbenzene); polyols such as glycerin, trimethylolpropane, and pentaerythritol; hydroxyamines such as N-methylethanolamine and N-ethylethanolamine; polyamines such as ethylenediamine, 1,3-diaminopropane, hexamethylene diamine, triethylenetetramine, diethylenetriamine, isophoronediamine, 4,4'-diaminodicyclohexylmethane, 2-hydroxyethylpropylenediamine, 4,4'-diphenylmethanediamine, xylylenediamine, diphenyldiamine, hydrazine, and piperazine; and water. These chain extenders may be used alone or in combination of two or more kinds thereof.

Among them, in view of a preferred balance of physical properties of the obtained polyurethane and mass availability at a low cost in industry, ethylene glycol, 1,4-butanediol, 1,5-pentanediol, 1,6-hexanediol, 1,8-octanediol, 1,9-nonanediol, 1,10-decanediol, 1,4-cyclohexanedimethanol, 1,4-dihydroxyethylcyclohexane, ethylenediamine, 1,3-diaminopropane, isophoronediamine, and 4,4'-diaminodicyclohexylmethane are preferred.

<Chain Terminator>

In the production of the polyurethane according to the present invention, for the purpose of controlling the molecular weight of the polyurethane, a known chain terminator for use in the production of a polyurethane can be used, if necessary.

The chain terminator is not particularly limited. Examples of the chain terminator include a compound having one active hydrogen group, as described in WO 2015/016261 and WO 2018/088575.

Specifically, examples thereof include monohydric alcohols such as methanol, ethanol, propanol, butanol, and hexanol, and secondary amines such as diethylamine, dibutylamine, di-n-propylamine, n-butylamine, monoethanolamine, and diethanolamine. These may be used alone or in combination of two or more kinds thereof.

<Catalyst>

In the production of the polyurethane according to the present invention, a known catalyst for use in the production of a polyurethane can be used.

The catalyst is not particularly limited. As the catalyst, for example, known polymerization catalysts such as tertiary amines and organic metal salts of tin, titanium, and the like described in WO 2015/016261 and WO 2018/088575 can be used.

<Solvent>

In the production of the polyurethane according to the present invention, a solvent may be used, if necessary.

The solvent is not particularly limited. Examples of the solvent include the solvents described in WO 2015/016261 and WO 2018/088575.

Specifically, examples thereof include dimethylformamide, diethylformamide, dimethylacetamide, dimethyl sulfoxide, tetrahydrofuran, methyl isobutyl ketone, dioxane, cyclohexanone, benzene, toluene, and ethyl cellosolve. These may be used alone or in combination of two or more kinds thereof.

<Amount to be Used and Use Method>

In a method for producing the polyurethane according to the present invention, the amounts to be used and the use methods of the polyisocyanate, the chain extender, the chain terminator, the catalyst, and the solvent are not particularly limited, and the conditions described in WO 2015/016261 and WO 2018/088575 can be appropriately optimized and used by those skilled in the art according to known techniques.

<Weight Average Molecular Weight (Mw) and Molecular Weight Distribution (Mw/Mn) of Polyurethane>

The lower limit of the weight average molecular weight (Mw) of the polyurethane according to the present invention is not particularly limited. The lower limit of the weight average molecular weight (Mw) is preferably 50,000 or more, more preferably 100,000 or more, and still more preferably 150,000 or more, from the viewpoint of improving the mechanical properties and the chemical resistance of the obtained polyurethane. On the other hand, the upper limit of the weight average molecular weight (Mw) is not particularly limited. The upper limit of the weight average molecular weight (Mw) is preferably 500,000 or less, more preferably 300,000 or less, and still more preferably 200,000 or less, from the viewpoint of maintaining good chemical resistance of the obtained polyurethane.

The upper limit and the lower limit can be freely combined. For example, the weight average molecular weight (Mw) of the polyurethane according to the present invention is preferably 50,000 or more and 500,000 or less, more

preferably 100,000 or more and 300,000 or less, and still more preferably 150,000 or more and 200,000 or less.

The lower limit of the molecular weight distribution (Mw/Mn) of the polyurethane according to the present invention is not particularly limited. The lower limit of the molecular weight distribution (Mw/Mn) is preferably 1.50 or more, more preferably 2.00 or more, and still more preferably 2.50 or more, from the viewpoint of improving the mechanical properties and the chemical resistance of the obtained polyurethane. On the other hand, the upper limit of the molecular weight distribution (Mw/Mn) is not particularly limited. The upper limit of the molecular weight distribution (Mw/Mn) is preferably 4.00 or less, more preferably 3.00 or less, and still more preferably 2.90 or less, from the viewpoint of maintaining good mechanical properties and chemical resistance of the obtained polyurethane.

The upper limit and the lower limit can be freely combined. For example, the molecular weight distribution (Mw/Mn) of the polyurethane according to the present invention is preferably 1.50 or more and 4.00 or less, more preferably 2.00 or more and 3.00 or less, and still more preferably 2.50 or more and 2.90 or less.

The weight average molecular weight (Mw) and the molecular weight distribution (Mw/Mn) are measured by gel permeation chromatography (GPC measurement), and the measurement conditions are as described in Examples to be described later.

<Application of Polyurethane>

The polyurethane according to the present invention is excellent in mechanical properties and chemical resistance, and has good heat resistance and weather resistance. Therefore, the polyurethane according to the present invention can be widely used for a foam, an elastomer, an elastic fiber, a coating material, a fiber, a pressure-sensitive adhesive, an adhesive, a floor material, a sealant, a medical material, an artificial leather, a synthetic leather, a coating agent, an active energy ray-curable polymer composition, and the like.

Particularly, when the polyurethane according to the present invention is used in applications such as an active energy ray-curable polymer composition, an artificial leather, a synthetic leather, a coating material such as an aqueous polyurethane coating material, a coating agent, an elastic fiber, a pressure-sensitive adhesive, and an adhesive, the following effects are obtained.

That is, the polyurethane according to the present invention has a good balance of chemical resistance, flexibility, heat resistance, and weather resistance, and can thus have good properties such as high durability in portions that come into contact with human skin or that are used with cosmetic agents or disinfection alcohol, sufficient flexibility, and resistance to physical impacts. In addition, the polyurethane according to the present invention can also be suitably used for automotive applications requiring heat resistance or outdoor applications requiring weather resistance.

[Effect (1)]

Since the polycarbonate diol according to the present invention contains the structural unit (2), the mechanical properties and the variation in mechanical properties of the obtained polyurethane are reduced. The reason for this is unclear, but is presumed to be as follows.

It is thought that in the case of producing a polyurethane using the polycarbonate diol according to the present invention as a raw material, the structural unit (2) contained in the polycarbonate diol is incorporated into the polyurethane in the form of an amide bond. Then, it is presumed that the interaction between polyurethane molecules due to hydrogen bonds via the amide bond is improved, and the amide bond portion acts as a crosslinking point or a crystalline hard segment structure, so that the mechanical properties of the polyurethane are improved.

In addition, the polycarbonate diol containing the structural unit (2) has a moderate amount of amide bonds in the polycarbonate diol. Then, the polyurethane obtained by using the polycarbonate diol has the amide bond in the structure. Therefore, the interaction between polyurethane molecules due to hydrogen bonds via the amide bond is improved, and the viscosity of the polyurethane or a composition containing the polyurethane is improved. As a result, the uniformity of the polyurethane composition can be efficiently improved by a stirring operation. When the viscosity is moderately improved, the coating stability and the molding stability of the polyurethane or a composition containing the polyurethane are improved. As a result, it is presumed that the improved dimensional stability of the obtained film-like material, fiber-like material and other molded articles reduces the variation in mechanical properties of the obtained polyurethane product.

[Effect (2)]

In the case where the content of the structural unit (2) in the polycarbonate diol is 80 ppm by mass or less in terms of nitrogen atoms in the polycarbonate diol according to the present invention, the larger the content of the structural unit (2), the more the coloration of the obtained polycarbonate diol is prevented and the more the color tone is improved. The reason for this is unclear, but is presumed to be as follows.

According to the investigations of the inventors of the present invention, the dihydroxy compound composition,

which is a raw material for the polycarbonate diol according to the present invention, may contain an aldehyde for the above reasons. When a polycarbonate diol is produced using such a dihydroxy compound composition, or when the obtained polycarbonate diol is stored for a long period of time, the aldehyde generates radicals by heating or oxidation, and an aldehyde group, a carboxylic acid, a double bond, and the like are generated in the dihydroxy compound or the polycarbonate diol. As a result, it is presumed that a conjugated structure is formed in the structure of the polycarbonate diol, and the polycarbonate diol is colored.

The structural unit (2) derived from the amine in the dihydroxy compound composition or the amine contained in the polycarbonate diol prevents the by-production of the aldehyde or the generation of aldehyde radicals. Therefore, it is presumed that when the coloration of the obtained polycarbonate diol can be prevented, and further, the content ratio of the amine or the structural unit (2) is set to be equal to or smaller than a predetermined value, the coloration of the polycarbonate diol caused by the excessive presence of the amine or the structural unit (2) per se can be prevented.

Examples

Hereinafter, the present invention will be described more specifically with reference to Examples and Comparative Examples. The present invention is not limited to these Examples as long as the scope of the present invention is not exceeded.

[Evaluation Method]

In the following, the evaluation methods for respective physical values are as follows.

[Evaluation Method: Polycarbonate Diol]

<Content of Structural Unit Derived from Amine (Content of Amine)>

The content of the structural unit derived from the amine (hereinafter referred to as an "amine-derived structural unit") contained in the structure of each of the polycarbonate diols (hereinafter may be abbreviated as "PCD") obtained in Examples and Comparative Examples was measured according to the following procedure. Note that, here, the amine-derived structural unit corresponds to the structural unit (2) in the polycarbonate diol.

Note that, in the following Examples 1 to 6 and Comparative Example, 1, 6-amino-1-hexanol as a primary amine is added as the amine in the present invention, but in the case where the polycarbonate diol contains a structural unit derived from a secondary amine such as dihexylamine used in Examples 9 to 11, those skilled in the art can measure the content of the structural unit derived from the secondary amine contained in the structure of the polycarbonate diol by combining the following procedure with a known technique.

The polycarbonate diol was dissolved in $CDCl_3$, and $^1$H-NMR measurement was carried out using a nuclear magnetic resonance spectrometer (400 MHz, model name: ECZ400S, manufactured by JEOL Ltd.) under conditions of a measurement temperature of 30°C and an accumulation number of 64 times.

From the obtained $^1$H-NMR measurement result, three peaks observed at the following signal positions were identified, and integral values A to C of each peak were obtained.

Integral value of 2H proton of $\alpha$-methylene group of amine-derived structural unit present at $\delta$ of 3.15 ppm to 3.05 ppm = A

Integral value of 2H proton peak of methylene group next to hydroxy group terminal in polycarbonate diol present at $\delta$ of 3.69 ppm to 3.50 ppm = B

Integral value of 4H proton peak of $\gamma$-methylene group of structure derived from 1,6-hexanediol in polycarbonate diol present at $\delta$ of 1.49 ppm to 1.30 ppm = C

The integral value of the peak derived from the amine-derived structural unit was defined as "AM".

Similarly, the integral value of the peak of the structural unit at the polycarbonate diol terminal derived from 1,6-hexanediol (hereinafter abbreviated as "16HD") was defined as "$16HD_m$". In addition, the integral value of the peak of the structural unit derived from 16HD in the polycarbonate diol other than the polycarbonate diol terminal was defined as "$16HD_o$".

Taking into account the number of protons, the integral value per one proton was calculated using the following equations.

$$AM = A \div 2$$

$$16HD_m = B \div 2$$

$$16HD_o = (C - 16HD_m \times 4) \div 4$$

Next, using the following equation, the number average molecular weight M(PCD) of the polycarbonate diol was calculated based on the ratio (diol unit number) of the total amount of structural units derived from 16HD to the total amount of structural units at the polycarbonate diol terminal derived from 16HD and the molecular weight of each structural unit of the polycarbonate diol.

[Math. 1]

$$\text{(DIOL UNIT NUMBER)} = \frac{16HD_o + 16HD_m}{16HD_m / 2}$$

$$M(PCD) = \left(\text{DIOL UNIT NUMBER}\right) \times M(16HD_o) + \left\{\left(\text{DIOL UNIT NUMBER}\right) - 1\right\} \times M(\text{CARBONYLGROUP}) + 2$$

Note that, in the above equation, $M(16HD_o)$ refers to the molecular weight (= 116) of the structural unit derived from 16HD in the polycarbonate diol other than the polycarbonate diol terminal, and M(carbonyl group) refers to the molecular weight (= 28) of the carbonyl group.

Using the above value and the following equation, the content ratio (unit: mass%) of the amine-derived structural unit contained in the structure of the polycarbonate diol with respect to 100%, i.e., the total mass of the polycarbonate diol was calculated.

[Math. 2]

$$\text{CONTENT RATIO (MASS\%) OF AMINE-DERIVED STRUCTURAL UNIT} = \frac{AM \times M(\text{AMINE}) \times 100}{AM \times M(\text{AMINE}) + M(PCD) \times 16HDm/2}$$

In the above equation, "M(amine)" represents the molecular weight (= 117) of 6-amino-1-hexanol as a primary amine.

Next, using the above value and the following equation, the content ratio (unit: ppm by mass) of the amine-derived structural unit contained in the structure of the polycarbonate diol in terms of nitrogen atoms was calculated.

[Math. 3]

$$\text{CONTENT RATIO (UNIT: ppm BY MASS) OF AMINE-DERIVED STRUCTURAL UNIT IN TERMS OF NITROGEN ATOMS} = \frac{\text{CONTENT RATIO (MASS\%) OF AMINE-DERIVED STRUCTURAL UNIT} \times 14 \times 10000}{M(\text{AMINE})}$$

In addition, for the content ratio of the amine-derived structural unit in the polycarbonate diol including 1,6-hexanediol, and 1,4-butanediol (hereinafter abbreviated as "14BG"), neopentyl glycol (hereinafter abbreviated as "NPG") or isosorbide (hereinafter abbreviated as "ISB") as dihydroxy compounds used in Examples, similarly, the content ratio (unit: ppm by mass) of the amine-derived structural unit in the polycarbonate diol in terms of nitrogen atoms with respect to 100%, i.e., the total mass of the polycarbonate diol was calculated based on the $^1$H-NMR measurement result, using the integral value of the peak derived from the structural unit at the polycarbonate diol terminal, the integral value of the peak derived from the structural unit in the polycarbonate diol other than the polycarbonate diol terminal, the number average

molecular weight M(PCD) of the polycarbonate diol, and an equation based on the above equation.

At this time, $M(14BG_o)$ was used as the molecular weight (= 88) of the structural unit derived from 14BG in the polycarbonate diol other than the polycarbonate diol terminal, $M(NPG_o)$ was used as the molecular weight (= 102) of the structural unit derived from NPG, and $M(ISB_o)$ was used as the molecular weight (= 144) of the structural unit derived from ISB. In addition, for "M(amine)", the molecular weight (= 185) of dihexylamine as a secondary amine was also used.

<Content Ratio of Aldehyde>

The content ratio of the aldehyde (hereinafter, abbreviated as "ALD") in each of the polycarbonate diols obtained in Examples and Comparative Examples was measured according to the following procedure. Note that, in this evaluation, the definitions of the "aldehyde" and the "content ratio of the aldehyde" are as described above in the description for the aldehyde.

The polycarbonate diol was dissolved in $CDCl_3$, and $^1$H-NMR measurement was carried out using a nuclear magnetic resonance spectrometer (400 MHz, model name: ECZ400S, manufactured by JEOL Ltd.) under conditions of a measurement temperature of 30°C and an accumulation number of 64 times.

From the obtained $^1$H-NMR measurement result, the integral value of the 1H proton of the aldehyde group in the aldehyde present at $\delta$ of 9.80 ppm to 9.75 ppm was defined as the integral value "$ALD_m$" of the peak derived from the aldehyde.

Next, using the value of M(PCD) used when calculating the content of the amine-derived structural unit and the following equation, the content ratio of the aldehyde (unit: ppm by mass) with respect to 100%, i.e., the total mass of the polycarbonate diol was calculated.

[Math. 4]

$$\text{CONTENT RATIO (UNIT: ppm BY MASS) OF ALDEHYDE} = \frac{\text{ALDm} \times \text{M(ALDEHYDE)} \times 1000000}{\text{ALDm} \times \text{M(ALDEHYDE)} + \text{AM} \times \text{M(AMINE)} + \text{M(PCD)} \times \text{16HDm}/2}$$

In the above equation, "M(aldehyde)" represents the molecular weight (= 116) of the aldehyde (6-hydroxyhexanal).

In addition, for the content ratio of the aldehyde in the polycarbonate diol including 1,6-hexanediol and 1,4-butanediol or neopentyl glycol as dihydroxy compounds used in Examples, similarly, the content ratio (unit: ppm by mass) of the aldehyde in the polycarbonate diol with respect to 100%, i.e., the total mass of the polycarbonate diol was calculated based on the $^1$H-NMR measurement result, using the integral value of the peak derived from the structural unit at the polycarbonate diol terminal, the integral value of the peak derived from the structural unit in the polycarbonate diol other than the polycarbonate diol terminal, the number average molecular weight M(PCD) of the polycarbonate diol, and an equation based on the above equation

<Color Tone>

As the coloration prevention of each of the polycarbonate diols obtained in Examples and Comparative Examples, that is, an index of the color tone, the APHA value of a polycarbonate diol sample was measured according to JIS K0071-1 (1998) by comparing the sample with a standard solution charged into a color comparison tube. A color standard solution 1000 degree (1 mgPt/mL) (manufactured by Kishida Chemical Co., Ltd.) was used as the reagent.

<Number Average Molecular Weight of Polycarbonate Diol (M(PCD))>

Each of the polycarbonate diols obtained in Examples and Comparative Examples was dissolved in $CDCl_3$, and $^1$H-NMR measurement was carried out using a nuclear magnetic resonance spectrometer (400 MHz, model name: AL-400, manufactured by JEOL Ltd.), and the number average molecular weight (M(PCD)) was calculated based on the signal position of each component by the above calculation method.

<Number Average Molecular Weight (Mn) Determined Based on Hydroxyl Value of Polycarbonate Diol after Distillation>

The hydroxyl value (unit: mgKOH/g) of each of the polycarbonate diols obtained in Examples and Comparative Examples was measured by a method using an acetylation reagent according to JIS K1557-1. Next, the number average molecular weight (Mn) of the polycarbonate polyol was calculated based on the obtained hydroxyl value using the following equation.

$$\text{Number average molecular weight (Mn)} = \text{(molecular weight of KOH)} \times 2000/\text{hydroxyl value}$$

[Evaluation Method: Dihydroxy Compound Composition]

<Content of Amine>

The content of the amine in 1 ,6-hexanediol used in Examples and Comparative Examples as the dihydroxy compound composition was measured according to the following procedure.

Note that, in this evaluation, the definition of "content of the amine" is as described above.

Note that, in the following Examples 1 to 6 and Comparative Example 1, 6-amino-1-hexanol as a primary amine is added as the amine in the present invention, but in the case where the dihydroxy compound composition contains a secondary amine such as dihexylamine used in Examples 9 to 11, those skilled in the art can measure the content of the secondary amine contained in the dihydroxy compound composition by combining the following procedure with a known technique.

1,6-Hexanediol was dissolved in $CDCl_3$, and $^1$H-NMR measurement was carried out using a nuclear magnetic resonance spectrometer (400 MHz, model name: ECZ400S, manufactured by JEOL Ltd.) under conditions of a measurement temperature of 30°C and an accumulation number of 32 times.

From the obtained $^1$H-NMR measurement result, using an integral value a of the peak of the 2H proton of the $\alpha$-methylene group at the amine terminal present at $\delta$ of 3.15 ppm to 3.05 ppm, an integral value b of the peak of the 2H proton of the $\alpha$-methylene group at the hydroxy group terminal present at $\delta$ of 3.69 ppm to 3.50 ppm, and the following equation, the content ratio (unit: mass%) of the amine in the dihydroxy compound composition with respect to 100%, i.e., the total mass of the dihydroxy compound composition was calculated.

[Math. 5]

$$\text{CONTENT RATIO (MASS\%) OF AMINE} = \frac{a/2 \times \text{M(AMINE)} \times 100}{a/2 \times \text{M(AMINE)} + (b/4 - a/2) \times \text{M(16HD)}}$$

In the above equation, "M(amine)" represents the molecular weight (= 117) of 6-amino-1-hexanol as a primary amine, and "M(16HD)" represents the molecular weight (= 118) of 1,6-hexanediol.

Using the calculated content ratio (unit: mass %) of the amine and the following equation, the content ratio (unit: ppm by mass) of the amine in terms of nitrogen atoms was calculated.

[Math. 6]

$$\text{CONTENT RATIO (UNIT: ppm BY MASS) OF AMINE IN TERMS OF NITROGEN ATOMS} = \frac{\text{CONTENT RATIO (MASS\%) OF AMINE} \times 14 \times 10000}{\text{M(AMINE)}}$$

In addition, for the content ratio of the amine in the dihydroxy compound composition including 1,6-hexanediol and 1,4-butanediol, isosorbide, or neopentyl glycol as dihydroxy compounds used in Examples, similarly, the content ratio (unit: ppm by mass) of the amine in the dihydroxy compound composition in terms of nitrogen atoms with respect to 100%, i.e., the total mass of the dihydroxy compound composition was calculated based on the $^1$H-NMR measurement result, using the integral value of the peak of the proton of the $\alpha$-methylene group in the amine (6-amino-1-hexanol), the integral value of the peak of the proton of the $\alpha$-methylene group in each dihydroxy compound, the molecular weight of each

dihydroxy compound, and an equation based on the above equation. At this time, "M(14BG)" was used as the molecular weight (= 90) of 1,4-butanediol, "M(ISB)" was used as the molecular weight (= 146) of isosorbide, and "M(NPG)" was used as the molecular weight (= 104) of neopentyl glycol.

In addition, for the content ratio of the amine in the dihydroxy compound composition including dihexylamine as the amine used in Examples, similarly, the content ratio (unit: ppm by mass) of the amine in the dihydroxy compound composition in terms of nitrogen atoms with respect to 100%, i.e., the total mass of the dihydroxy compound composition was calculated based on the $^1$H-NMR measurement result, using the integral value of the peak of the proton of the α-methylene group in the amine, the integral value of the peak of the proton of the α-methylene group in each dihydroxy compound, the molecular weight of each dihydroxy compound, and an equation based on the above equation. At this time, "M(amine)" was used as the molecular weight (= 185) of dihexylamine.

<Content Ratio of Aldehyde>

The content ratio of the aldehyde in 1,6-hexanediol used in Examples and Comparative Examples as the dihydroxy compound composition was measured according to the following procedure. Note that, in this evaluation, the definitions of the "aldehyde" and the "content ratio of the aldehyde" are as described above in the description for the aldehyde.

1,6-Hexanediol was dissolved in $CDCl_3$, and $^1$H-NMR measurement was carried out using a nuclear magnetic resonance spectrometer (400 MHz, model name: ECZ400S, manufactured by JEOL Ltd.) under conditions of a measurement temperature of 30°C and an accumulation number of 32 times.

Using the integral values a and b used in calculating the content of the amine, an integral value c of the peak of the 1H proton of the aldehyde group in the aldehyde present at δ of 9.80 pp to 9.75 ppm, and the following equation, the content ratio (unit: ppm by mass) of the aldehyde with respect to 100%, i.e., the total mass of the dihydroxy compound composition including 1,6-hexanediol was calculated.

[Math. 7]

$$\text{CONTENT RATIO (UNIT: ppm BY MASS) OF ALDEHYDE} = \frac{c \times M(\text{ALDEHYDE}) \times 1000000}{c \times M(\text{ALDEHYDE}) + a/2 \times M(\text{AMINE}) + (b/4-(a+c)/2) \times M(\text{16HD})}$$

In the above equation, "M(amine)" represents the molecular weight (= 117) of 6-amino-1-hexanol as a primary amine, "M(aldehyde)" represents the molecular weight (= 116) of the aldehyde (6-hydroxyhexanal), and "M(16HD)" represents the molecular weight (= 118) of 1,6-hexanediol.

In addition, for the content ratio of the aldehyde in the dihydroxy compound composition including 1,6-hexanediol and 1,4-butanediol or neopentyl glycol as dihydroxy compounds used in Examples, similarly, the content ratio (unit: ppm by mass) of the aldehyde in the dihydroxy compound composition with respect to 100%, i.e., the total mass of the dihydroxy compound composition was calculated based on the $^1$H-NMR measurement result, using the integral value of the peak of the proton of the α-methylene group in the amine (6-amino-1-hexanol), the integral value of the peak of the proton of the aldehyde group in the aldehyde (6-hydroxyhexanal), the integral value of the peak of the proton of the α-methylene group in each dihydroxy compound, the molecular weight of each dihydroxy compound, and an equation based on the above equation. At this time, "M(14BG)" was used as the molecular weight (= 90) of 1,4-butanediol, and "M(NPG)" was used as the molecular weight (= 104) of neopentyl glycol.

In addition, for the content ratio of the aldehyde in the dihydroxy compound composition including dihexylamine as the amine used in Examples, similarly, the content ratio (unit: ppm by mass) of the aldehyde in the dihydroxy compound composition with respect to 100%, i.e., the total mass of the dihydroxy compound composition was calculated based on the $^1$H-NMR measurement result, using the integral value of the peak of the proton of the α-methylene group in the amine, the integral value of the peak of the proton of the aldehyde group in the aldehyde (6-hydroxyhexanal), the integral value of the peak of the proton of the α-methylene group in each dihydroxy compound, the molecular weight of each dihydroxy compound, and an equation based on the above equation. At this time, "M(amine)" was used as the molecular weight (= 185) of dihexylamine.

[Evaluation Method: Polyurethane]

<Mass Average Molecular Weight (Mw) and Number Average Molecular Weight (Mn)>

The mass average molecular weight (Mw) and number average molecular weight (Mn) of each of the polyurethanes obtained in Examples and Comparative Examples were determined by gel permeation chromatography (GPC measurement) according to the following procedure.

A polyurethane sample was dissolved in dimethylacetamide (containing 0.3 mass% of anhydrous lithium bromide) to have a polyurethane concentration of 0.07 mass%, and the resultant was used as a GPC measurement sample. The GPC measurement was carried out using a GPC device (model name: HLC-8420 manufactured by Tosoh Corporation, column: TSKgel SuperAWM-H ×2, manufactured by Tosoh Corporation), under the measurement conditions of a sample injection amount of about 40 μE, a column temperature of 40°C, a measurement solvent (mobile phase) of dimethylacetamide (containing 0.3 mass% of anhydrous lithium bromide), and a flow rate of 0.6 mL/min.

The molecular weight of the polyurethane was measured in terms of the number average molecular weight (Mn), the weight average molecular weight (Mw), and the molecular weight distribution (Mw/Mn) in terms of standard polystyrene using a commercially available monodisperse polystyrene solution as a standard sample.

<Viscosity of Solution>

The viscosity of each of the polyurethane solutions obtained in Examples and Comparative Examples was measured at 40°C using an E-type viscometer (device name: TV-100EH, cone: 3° × R14, manufactured by Toki Sangyo Co., Ltd.).

<Mechanical Properties>

As an index of the mechanical properties of the polyurethane, a tensile test was carried out on the polyurethane using the following method to evaluate various mechanical properties.

A solution of each of the polyurethanes obtained in Examples and Comparative Examples was applied onto a 0.1 mm thick fluororesin sheet (trade name: fluorine tape "ΓΓITOFLON 900", manufactured by Nitto Denko Corporation) using an applicator having a clearance of 500 μm, and dried at a temperature of 80°C for 1 hour, then at 100°C for 0.5 hours, and further at 100°C in a vacuum state for 1.0 hour to dry off the solvent (DMF), and then allowed to stand at a constant temperature and humidity of 23°C and 55% RH for 12 hours or longer to obtain a laminated film in which a polyurethane layer was formed on the surface of the fluororesin sheet. The thickness of the polyurethane layer after drying was 100 μm.

The polyurethane layer was peeled off from the obtained laminated film, and then a rectangular polyurethane film (length: 150 mm, width: 10 mm, thickness: 100 μm) was cut out to prepare a tensile test sample piece.

(Tensile Test)

The above tensile test sample piece was subjected to a tensile test according to JIS K 6301 (2010) using a tabletop precision universal testing machine (product name: Autograph AGS-X, manufactured by Shimadzu Corporation) under conditions of a chuck-to-chuck distance of 50 mm, a tensile speed of 500 mm/min, and a temperature of 23 °C (relative humidity: 60%). The measurement was carried out using four tensile test sample pieces, and average values and standard deviations of each of a 300% modulus, and the stress (strength at break) and the elongation (elongation at break) at the time when the test pieces broke were measured.

The following equation was used to calculate the coefficient of variation of each of the strength at break and the elongation at break.

$$\text{Coefficient of variation (\%)} = (\text{standard deviation/average value}) \times 100$$

<Chemical Resistance of Polyurethane>

As an index of the chemical resistance of the polyurethane, a mass change rate when the polyurethane was immersed in a test solution was measured using the following method.

A solution of each of the polyurethanes obtained in Examples and Comparative Examples was applied onto a 0.1 nun thick fluororesin sheet (trade name: fluorine tape "ΓΓITOFLON 900", manufactured by Nitto Denko Corporation) using an applicator having a clearance of 500 μm, and dried at a temperature of 80°C for 1 hour, then at 100°C for 0.5 hours, and further at 100°C in a vacuum state for 1.0 hour to dry off the solvent (DMF), to obtain a laminated film in which a

polyurethane layer was formed on the surface of the fluororesin sheet. The thickness of the polyurethane layer after drying was 100 μm.

The polyurethane layer was peeled off from the obtained laminated film, and then a square polyurethane film (length: 3 cm, width: 3 cm, thickness: 100 μm) was cut out to prepare a chemical resistance test sample piece.

(Ethanol Resistance Test)

After measuring the weight of the chemical resistance test piece using a precision balance, the sample piece was charged into a glass-made petri dish having an inner diameter of 10 cm<p and containing 50 mL of ethanol as a test solvent and immersed in the solvent at room temperature of about 23°C for 1 hour. After the test, the test piece was taken out and the front and back surfaces thereof were lightly wiped with a paper wiper and by performing mass measurement using a precision balance, the mass change rate (percentage increase) was calculated based on the change in mass of the test piece before and after the test. A mass change rate closer to 0% indicates that the ethanol resistance is better.

(Ethyl Acetate Resistance Test)

After measuring the weight of the chemical resistance test piece using a precision balance, the sample piece was charged into a glass-made petri dish having an inner diameter of 10 cmφ and containing 50 mL of ethyl acetate as a test solvent and immersed in the solvent at room temperature of about 23°C for 20 minutes. After the test, the test piece was taken out and the front and back surfaces thereof were lightly wiped with a paper wiper and by performing mass measurement using a precision balance, the mass change rate (percentage increase) was calculated based on the change in mass of the test piece before and after the test. A mass change rate closer to 0% indicates that the ethyl acetate resistance is better.

[Raw Material to be Used]

The abbreviations for the raw materials used in Examples and Comparative Example are as follows.

16HD: 1,6-hexanediol (manufactured by BASF Japan Ltd.)
14BG: 1,4-butanediol (manufactured by Mitsubishi Chemical Corporation)
ISB: isosorbide (manufactured by Roquette Co., Ltd.)
NPG: neopentyl glycol (manufactured by MITSUBISHI GAS CHEMICAL COMPANY, INC.)
6-amino-1-hexanol (manufactured by Tokyo Chemical Industry Co., Ltd.)
dihexylamine (manufactured by Tokyo Chemical Industry Co., Ltd.)
DPC: diphenyl carbonate (manufactured by Mitsubishi Chemical Corporation)
Mg catalyst: magnesium acetate tetrahydrate (manufactured by FUJIFILM Wako Pure Chemical Corporation)
MDI: diphenylmethane diisocyanate (manufactured by Tokyo Chemical Industry Co., Ltd.)
U-830: dioctyltin monodecanoate (trade name: NEOSTANN U-830, manufactured by NITTOH CHEMICAL Co., Ltd.)
DMF: N,N-dimethylformamide dehydrate (manufactured by FUJIFILM Wako Pure Chemical Corporation)

[Production and Evaluation of Polycarbonate Diol]

<Example 1>

Into a 1 L glass separable flask equipped with a stirrer, a distillate trap, and a pressure adjusting device, 323 g of 16HD containing 0.6 g of 6-amino-1-hexanol, 527 g of DPC as a carbonate compound, and 1.4 mL of a Mg catalyst aqueous solution (concentration: 8.4 g/L of magnesium acetate tetrahydrate) as an transesterification reaction catalyst were charged as a raw material dihydroxy compound composition, and the atmosphere inside the flask was substituted with nitrogen. Then, the contents in the flask were heated to a temperature of 160°C while being stirred, and the contents were dissolved by heating. The pressure inside the flask at this time was 101 kPa. Thereafter, the pressure inside the flask was gradually reduced from 101 kPa to 24 kPa over 2 minutes, and dien, the reaction was continued for 90 minutes while removing the generated phenol from the reaction system. Next, the pressure inside the flask was gradually reduced to 9.3 kPa over 90 minutes, and then further gradually reduced to 0.7 kPa over 30 minutes. After the reaction was continued, the temperature of the contents was raised to 170°C, and the reaction was continued for an additional 120 minutes while removing phenol and the unreacted dihydroxy compound from the reaction system. Thereafter, the temperature of the contents was allowed to cool to room temperature to obtain 368 g of a polycarbonate diol-containing composition.

The obtained polycarbonate diol was designated "PCD2".

<Comparative Example 1>

The reaction was carried out under the same conditions as in Example 1 except that 323 g of 16HD not containing 6-amino-1-hexanol was used as the raw material dihydroxy compound composition, unlike in Example 1.
The obtained polycarbonate diol was designated "PCD1". The evaluation results of this PCD1 are shown in Table 1.

<Example 2>

The reaction was carried out under the same conditions as in Example 1 except that 16HD containing 6-amino-1-hexanol in the amount shown in Table 1 was used as the raw material dihydroxy compound composition, unlike in Example 1.
The obtained polycarbonate diol was designated "PCD3". The evaluation results of this PCD3 are shown in Table 1.

<Example 3>

The reaction was carried out under the same conditions as in Example 1 except that 16HD containing 6-amino-1-hexanol in the amount shown in Table 1 was used as the raw material dihydroxy compound composition, unlike in Example 1.
The obtained polycarbonate diol was designated "PCD4". The evaluation results of this PCD4 are shown in Table 1.

<Example 4>

The reaction was carried out under the same conditions as in Example 1 except that 16HD and 14BG containing 6-amino-1-hexanol in the amounts shown in Table 1 were used as the raw material dihydroxy compound composition, and the 16HD, the 14BG, the DPC, and the Mg catalyst aqueous solution were charged in the blending amounts shown in Table 1, unlike in Example 1.
The obtained copolymerized polycarbonate diol was designated "PCD5". The evaluation results of this PCD5 are shown in Table 1.

<Example 5>

The reaction was carried out under the same conditions as in Example 1 except that 16HD and ISB containing 6-amino-1-hexanol in the amounts shown in Table 1 were used as the raw material dihydroxy compound composition, and the 16HD, the ISB, the DPC, and the Mg catalyst aqueous solution were charged in the blending amounts shown in Table 1, unlike in Example 1.
The obtained copolymerized polycarbonate diol was designated "PCD6". The evaluation results of this PCD6 are shown in Table 1.

<Example 6>

The reaction was carried out under the same conditions as in Example 1 except that 16HD and ISB containing 6-amino-1-hexanol in the amounts shown in Table 1 were used as the raw material dihydroxy compound composition, and the 16HD, the ISB, the DPC, and the Mg catalyst aqueous solution were charged in the blending amounts shown in Table 1, unlike in Example 1.
The obtained copolymerized polycarbonate diol was designated "PCD7". The evaluation results of this PCD7 are shown in Table 1.

[Table 1]

Table 1

| | | | Unit | Comparative Example 1 | Example 1 | Example 2 |
|---|---|---|---|---|---|---|
| Blending amount of PCD raw material | Dihydroxy compound composition | 16HD | g | 323 | 323 | 322 |
| | | 14BG | g | - | - | - |
| | | ISB | g | - | - | - |
| | Carbonate compound | DPC | g | 528 | 527 | 528 |
| | Catalyst | Mg catalyst aqueous solution | mL | 1.4 | 1.4 | 1.4 |
| PCD raw material | Content of amine*1 in dihydroxy compound composition | | g | - | 0.6 | 1.6 |
| | Content of amine*1 in dihydroxy compound composition (in terms of nitrogen atoms) | | ppm by mass | 0 | 240 | 600 |
| PCD polymerization result | PCD yield amount | | g | 368 | 368 | 336 |
| | PCD yield | | % | 95 | 95 | 87 |
| | PCD kind | | - | PCD1 | PCD2 | PCD3 |
| | Content ratio of structural unit derived from 16HD in PCD | | mass% | 100 | 100 | 100 |
| | Content of amine-derived structural unit*1 in PCD structure (in terms of nitrogen atoms) | | ppm by mass | 0 | 180 | 540 |
| PCD evaluation result | Number average molecular weight (Mn) | | - | 2000 | 1848 | 1792 |
| | Color tone (APHA) | | - | 10 | 20 | 50 |

*1: amine: 6-amino-1-hexanol

Table 1 (continued)

| | | | Unit | Example 3 | Example 4 | Example 5 | Example 6 |
|---|---|---|---|---|---|---|---|
| Blending amount of PCD raw material | Dihydroxy compound composition | 16HD | g | 322 | 40.8 | 102 | 101 |
| | | 14BG | g | - | 912 | - | - |
| | | ISB | g | - | - | 133 | 133 |
| | Carbonate compound | DPC | g | 528 | 268 | 265 | 265 |
| | Catalyst | Mg catalyst aqueous solution | mL | 1.4 | 0.7 | 0.9 | 0.9 |
| PCD raw material | Content of amine*1 in dihydroxy compound composition | | g | 3.2 | 1.4 | 0.3 | 22 |
| | Content of amine*1 in dihydroxy compound composition (in terms of nitrogen atoms) | | ppm by mass | 1190 | 1250 | 140 | 1140 |

(continued)

| | | Unit | Example 3 | Example 4 | Example 5 | Example 6 |
|---|---|---|---|---|---|---|
| PCD polymerization result | PCD yield amount | g | 336 | 148 | 247 | 242 |
| | PCD yield | % | 87 | 90 | 93 | 91 |
| | PCD kind | - | PCD4 | PCD5 | PCD6 | PCD7 |
| | Content ratio of structural unit derived from 16HD in PCD | mass% | 100 | 33 | 44 | 44 |
| | Content of amine-derived structural unit*1 in PCD structure (in terms of nitrogen atoms) | ppm by mass | 910 | 1050 | 100 | 930 |
| PCD evaluation result | Number average molecular weight (Mn) | - | 1879 | 1587 | 724 | 717 |
| | Color tone (APHA) | - | 70 | 70 | 40 | 70 |
| *1: amine: 6-amino-1-hexanol | | | | | | |

The polycarbonate diols obtained in Examples 1 to 6 all have a color tone (APHA) of 70 or less, which is at an industrially acceptable level.

[Production and Evaluation of Polyurethane]

<Purification of Polycarbonate Diol>

In order to remove phenol contained in the polycarbonate diols (PCD1 to PCD4) obtained in Comparative Example 1 and Examples 1 to 3, first, 0.3 g of a 0.85 mass% phosphoric acid aqueous solution was added to 220 g of the polycarbonate diol to deactivate magnesium acetate. The solution was then fed to a thin-film distillation device at a flow rate of 20 g/min, and thin-film distillation was carried out (temperature: 180°C to 190°C, pressure: 40 Pa to 67 Pa). As the thin-film distillation device, a molecular distillation device, Model MS-300, manufactured by Sibata Scientific Technology Ltd., equipped with an internal condenser having a diameter of 50 mm, a height of 200 mm and an area of 0.0314 $m^2$ and a jacket, was used.

Hereinafter, PCD1 to PCD4 after the thin-film distillation are referred to as PCD1A to PCD4A, respectively. Table 2 shows the content ratio of the amine-derived structural unit in the PCD1A to PCD4A obtained by the thin-film distillation.

<Comparative Example 1-2>

Into a separable flask equipped with a thermocouple and a cooling tube, 69.8 g of PCD1A preheated to 80°C, 6.30 g of 14BG as a chain extender, 0.02 g of U-830 as a catalyst, and 239 g of DMF as a reaction solvent were charged, and the mixture was immersed in an oil bath set at 55°C and stirred and mixed at a stirring speed of 60 rpm until the mixture was homogenous.

The amount of water in the reaction solution in the flask was measured, and the amount of MDI consumed by the water was calculated. The amount of each raw material sampled was also recorded, and was corrected accordingly.

To the reaction solution, MDI equivalent to an NCO/OH molar ratio of 0.900 (including water correction) was added as an isocyanate compound in a solid state using a funnel, and the mixture was stirred and mixed at a stirring speed of 60 rpm until it was uniform.

Note that, in the present description, the "NCO/OH molar ratio" refers to the ratio (molar ratio) of the total amount of substance (number of moles) of MDI to a value obtained by subtracting the total amount of substance (number of moles) of the contained water from the total amount of substance (number of moles) of the polycarbonate diol and 14BG when MDI is added.

Immediately after the addition of MDI, an exothermic peak was observed, accompanied by a rise in the reaction solution temperature of+10°C to 15°C, and 5 minutes after the exothermic peak had subsided, the temperature of the oil bath was set to 70°C and raised.

One hour after the addition of MDI, the molecular weight of the polyurethane in the reaction solution was measured to confirm whether the target molecular weight (MW = the range of 170,000 to 180,000) had been reached. In the case where the target was not reached, MDI was added in an amount equivalent to an NCO/OH ratio of 0.005 to 0.015,

the reaction was continued for an additional 30 minutes or longer, and then the molecular weight of the polyurethane in the reaction solution was measured. The addition of MDI and the molecular weight measurement were repeated until the target Mw was reached. Finally, a polyurethane solution containing a polyurethane having a total NCO/OH ratio of 0.990 and a Mw of 170,032 was obtained.

The evaluation results of the obtained polyurethane solution are shown in Table 2.

<Example 1-2>

Polyurethane polymerization was carried out under the same conditions and in the same manner as in Comparative Example 1-2 to obtain a polyurethane solution, except that PCD2A was used instead of PCD1A, and the amounts of each raw material were changed to the amounts shown in Table 2, unlike in Comparative Example 1-2.

The evaluation results of the obtained polyurethane solution are shown in Table 2.

<Example 2-2>

Polyurethane polymerization was carried out under the same conditions and in the same manner as in Comparative Example 1-2 to obtain a polyurethane solution, except that PCD3A was used instead of PCD1A, and the amounts of each raw material were changed to the amounts shown in Table 2, unlike in Comparative Example 1-2.

The evaluation results of the obtained polyurethane solution are shown in Table 2.

<Example 3-2>

Polyurethane polymerization was carried out under the same conditions and in the same manner as in Comparative Example 1-2 to obtain a polyurethane solution, except that PCD4A was used instead of PCD1A, and the amounts of each raw material were changed to the amounts shown in Table 2, unlike in Comparative Example 1-2.

The evaluation results of the obtained polyurethane solution are shown in Table 2.

[Table 2]

Table 2

| | | | Unit | Comparative Example 1-2 | Example 1-2 |
|---|---|---|---|---|---|
| Blending amount of polyurethane raw material | Polycarbonate diol (PCD) | PCD1A | g | 69.8 | - |
| | | PCD2A | g | - | 69.7 |
| | | PCD3A | g | - | - |
| | | PCD4A | g | - | - |
| | Content of amine-derived structural unit*1 in PCD after distillation (in terms of nitrogen atoms) | | ppm by mass | 0 | 210 |
| | Isocyanate compound | MDI | g | 27.5 | 26.4 |
| | Chain extender | 14BG | g | 6.30 | 613 |
| | Catalyst | U830 | g | 0.02 | 0.02 |
| | Solvent | DMF | g | 239 | 238 |
| | Viscosity of polyurethane solution | | mPa·s | 82.6 | 90.6 |
| | Number average molecular weight (Mn) | | - | 71899 | 71381 |
| | Weight average molecular weight (Mw) | | - | 170032 | 178045 |
| | Molecular weight distribution (Mw/Mn) | | - | 2.4 | 2.5 |

(continued)

| | | | | Unit | Comparative Example 1-2 | Example 1-2 |
|---|---|---|---|---|---|---|
| Polyurethane evaluation result | Mechanical properties | Strength at break | Average | MPa | 58.5 | 65.3 |
| | | | Standard deviation | MPa | 7.2 | 5.4 |
| | | | Coefficient of variation | % | 12.3 | 8.2 |
| | | Elongation at break | Average | % | 4952 | 443.2 |
| | | | Standard deviation | % | 41.6 | 26.9 |
| | | | Coefficient of variation | % | 8.4 | 6.1 |
| | | 300% Modulus | Average | % | 31.3 | 35.5 |
| | | | Standard deviation | % | 1.0 | 1.1 |
| | | | Coefficient of variation | % | 3.1 | 3.0 |
| | Chemical resistance | Ethanol resistance | Weight change rate | mass% | 10.3 | 9.8 |
| | | Ethyl acetate resistance | Weight change rate | mass% | 80.3 | 80.5 |
| *1: amine: 6-amino-1-hexanol | | | | | | |

Table 2 (Continued)

| | | | Unit | Example 2-2 | Example 3-2 |
|---|---|---|---|---|---|
| Blending amount of polyurethane raw material | Polycarbonate diol (PCD) | PCD1A | g | | - |
| | | PCD2A | g | - | - |
| | | PCD3A | g | 69.7 | - |
| | | PCD4A | 9 | | 697 |
| | Content of amine-derived structural unit*1 in PCD after distillation (in terms of nitrogen atoms) | | ppm by mass | 540 | 990 |
| | Isocyanate compound | MDI | g | 27.1 | 28.1 |
| | Chain extender | 14BG | g | 6.30 | 6.19 |
| | Catalyst | U830 | g | 0.02 | 0.02 |
| | Solvent | DMF | g | 239 | 239 |
| | Viscosity of polyurethane solution | | mPas | 104.4 | 105.5 |
| | Number average molecular weight (Mn) | | - | 73071 | 70646 |
| | Weight average molecular weight (Mw) | | - | 181560 | 180389 |
| | Molecular weight distribution (Mw/Mn) | | - | 2.5 | 2.6 |

(continued)

| | | | | Unit | Example 2-2 | Example 3-2 |
|---|---|---|---|---|---|---|
| Polyurethane evaluation result | Mechanical properties | Strength at break | Average | MPa | 65.4 | 66.2 |
| | | | Standard deviation | MPa | 3.8 | 1.5 |
| | | | Coefficient of variation | % | 5.9 | 2.3 |
| | | Elongation at break | Average | % | 451.2 | 543.2 |
| | | | Standard deviation | % | 18.3 | 18.1 |
| | | | Coefficient of variation | % | 4.1 | 3.3 |
| | | 300% Modulus | Average | % | 353 | 31.1 |
| | | | Standard deviation | % | 1.0 | 0.5 |
| | | | Coefficient of variation | % | 2.8 | 1.7 |
| | Chemical resistance | Ethanol resistance | Weight change rate | mass% | 9.9 | 10.5 |
| | | Ethyl acetate resistance | Weight change rate | mass% | 807 | 805 |
| *1: amine: 6-amino-1-hexanol | | | | | | |

The following can be seen from Table 2.

The obtained polyurethanes in Examples 1-2 to 3-2 have excellent mechanical properties without impairing the chemical resistance, and a smaller variation (coefficient of variation) in mechanical properties, than the polyurethane obtained in Comparative Example 1-2.

On the other hand, the polyurethane obtained in Comparative Example 1-2 has strength at break smaller and a larger variation (coefficient of variation) in mechanical properties than those in Examples 1-2 to 3-2 since the polycarbonate diol used as the raw material does not contain an amine-derived structural unit.

From the above, it is clear that the polycarbonate diol according to the present invention can provide a polyurethane excellent in mechanical properties, having a reduced variation in mechanical properties, and maintaining good chemical resistance.

Note that, in the case where the content of the structural unit (2) contained in the polycarbonate diol is 80 ppm by mass or less in terms of nitrogen atoms with respect to the total mass of the polycarbonate diol, the larger the content of the structural unit (2), the more the coloration of the polycarbonate diol can be prevented and the better the color tone can be controlled, which is shown in the following Examples and Comparative Examples.

[Comparative Example 2]

100 g of 16HD was heat-treated in air at 130°C for 3 hours to obtain a dihydroxy compound composition in which a portion of 16HD was oxidized to 6-hydroxyhexanal, which was designated as HD(1). The contents of the amine and the aldehyde in HD(1) are shown in Table 3.

Into a 0.5 L glass separable flask equipped with a stirrer, a distillate trap, and a pressure adjusting device, 96 g of HD(1), 154 g of DPC as a carbonate compound, and 0.4 mL of a Mg catalyst aqueous solution (concentration: 8.4 g/L of magnesium acetate tetrahydrate) as an transesterification reaction catalyst were charged as a raw material dihydroxy compound composition, and the atmosphere inside the flask was substituted with nitrogen. Then, the contents in the flask were heated to a temperature of 160°C while being stirred, and the contents were dissolved by heating. The pressure

inside the flask at this time was 101 kPa. Thereafter, the pressure inside the flask was gradually reduced from 101 kPa to 24 kPa over 2 minutes, and then, the reaction was continued for 90 minutes while removing the generated phenol from the reaction system. Next, the pressure inside the flask was gradually reduced to 9.3 kPa over 90 minutes, and then further gradually reduced to 0.7 kPa over 30 minutes. After the reaction was continued, the temperature of the contents was raised to 170°C, and the reaction was continued for an additional 90 minutes while removing phenol and the unreacted dihydroxy compound from the reaction system. Then, the temperature of the contents was allowed to cool to room temperature to obtain 114 g of polycarbonate diol. The evaluation results of the obtained polycarbonate diol are shown in Table 3.

[Example 7]

0.01 g of 6-amino-1-hexanol as an amine was added to 100 g of 16HD, and the mixture was heat-treated in air at 130°C for 3 hours to obtain HD(2) in which a portion of 16HD was oxidized to 6-hydroxyhexanal. The contents of the amine and the aldehyde in HD(2) are shown in Table 3.

The reaction was carried out under the same conditions as in Comparative Example 2 to obtain a polycarbonate diol, except that HD(2) was used instead of HD(1) used in Comparative Example 2 in the synthesis of the polycarbonate diol. The evaluation results of the obtained polycarbonate diol are shown in Table 3.

[Comparative Example 3]

150 g of 16HD was heat-treated in air at 130°C for 3 hours to obtain a 16HD composition in which a portion of 16HD was oxidized to 6-hydroxyhexanal, which was designated as HD(3).

A dihydroxy compound composition (16HD composition) was obtained by mixing HD(3) and 14BG in the amounts shown in Table 3, and this was designated as HD(3-1). The content of the amine and the content of the aldehyde in HD(3-1) are shown in Table 3.

The reaction was carried out under the same conditions as in Comparative Example 2 to obtain a polycarbonate diol, except that HD(3-1) was used instead of HD(1) used in Comparative Example 2, and the blending amounts of the 16HD composition and the carbonate compound were as shown in Table 3 in the synthesis of the polycarbonate diol. The evaluation results of the obtained polycarbonate diol are shown in Table 3.

[Examples 8 to 10]

The amines shown in Table 3 were added in the amounts shown in Table 3 to 150 g of 16HD, and the mixture was heated in air at 130°C for 3 hours to oxidize a portion of the 16HD to 6-hydroxyhexanal, thereby obtaining 16HD compositions, which were designated as HD(4) to HD(6). HD(4) to HD(6) and 14BG were mixed in the blending amounts shown in Table 3 to obtain dihydroxy compound compositions (16HD compositions), which were designated as HD(4-1) to HD(6-1), respectively. The content of the amine and the content of the aldehyde in HD(4-1) to HD(6-1) are shown in Table 3.

The reaction was carried out under the same conditions as in Comparative Example 2 to obtain a polycarbonate diol, except that HD(4-1) to HD(6-1) were used instead of HD(1) used in Comparative Example 2, and the blending amounts of the 16HD composition and the carbonate compound were as shown in Table 3 in the synthesis of the polycarbonate diol. The evaluation results of the obtained polycarbonate diol are shown in Table 3.

[Example 11]

0.02 g of dihexylamine as an amine was added to 150 g of 16HD, and the mixture was heated in air at 130°C for 3 hours to obtain a dihydroxy compound composition (16HD composition) in which a portion of 16HD was oxidized to 6-hydroxyhexanal, which was designated as HD(7). A dihydroxy compound composition was obtained by mixing HD(7) and NPG in the amounts shown in Table 3, and this was designated as HD(7-1). The content of the amine and the content of the aldehyde in HD(7-1) are shown in Table 3.

The reaction was carried out under the same conditions as in Comparative Example 2 to obtain a polycarbonate diol, except that HD(7-1) was used instead of HD(1) used in Comparative Example 2, and the blending amounts of the 16HD composition and the carbonate compound were as shown in Table 3 in the synthesis of the polycarbonate diol. The evaluation results of the obtained polycarbonate diol are shown in Table 3.

[Table 3]

Table 3

| | | | Unit | Comparative Example 2 | Example 7 | Comparative Example 3 |
|---|---|---|---|---|---|---|
| 16HD composition | Dihydroxy compound | | Kind | 16HD | 16HD | 16HD |
| | | | g | 100 | 100 | 150 |
| | Amine | | Kind | - | 6-Amino-1-hexanol | - |
| | | | - | - | 0.01 | - |
| | Abbreviation of 16HD composition after heat treatment*1 | | g | HD(1) | HD(2) | HD(3) |
| Dihydroxy compound composition | Blending amount of dihydroxy compound | 16HD composition | Kind | HD(1) | HD(2) | HD(3) |
| | | | g | 96 | 96 | 38 |
| | | 14BG | g | - | - | 47 |
| | | NPG | g | - | - | |
| | Content of amine (in terms of nitrogen atoms) | | ppm by mass | 0 | 12 | 0 |
| | Content of aldehyde*2 | | ppm by mass | 990 | 330 | 930 |
| | Abbreviation of dihydroxy compound composition | | - | HD(1) | HD(2) | HD(3-1) |
| Blending amount of PCD raw material | Dihydroxy compound composition | | Kind | HD(1) | HD(2) | HD(3-1) |
| | | | g | 96 | 96 | 85 |
| | Carbonate compound | DPC | g | 154 | 154 | 154 |
| | Catalyst | Mg catalyst aqueous solution | mL | 0.4 | 0.4 | 0.4 |
| PCD | Content of amine-derived structural unit (in terms of nitrogen atoms) | | ppm by mass | 0 | 9 | 0 |
| | Number average molecular weight (Mn) | | - | 1738 | 1639 | 1639 |
| | Content of aldehyde*2 | | ppm by mass | 640 | 380 | 453 |
| | Color tone (APHA) | | - | 100 | 80 | 110 |

*1: heat treatment conditions: 100 g or 150 g of 16HD is heated in air at temperature of 130°C for 3 hours.
*2: aldehyde: 1-hydroxy-6-hexanal

Table 3 (Continued)

| | | | Unit | Example 8 | Example 9 | Example 10 | Example 11 |
|---|---|---|---|---|---|---|---|
| 16HD composition | Dihydroxy compound | | Kind | 16HD | 16HD | 16HD | 16HD |
| | | | 9 | 150 | 150 | 150 | 150 |
| | Amine | | Kind | 6-Amino-1-hexanol | Dihexylamine | Dihexylamine | Dihexylamine |
| | | | - | 0.006 | 0.02 | 0.24 | 0.02 |
| | Abbreviation of 16HD composition after heat treatment*1 | | g | HD(4) | HD(5) | HD(6) | HD(7) |
| Dihydroxy compound composition | Blending amount of dihydroxy compound | 16HD composition | Kind | HD(4) | HD(5) | HD(6) | HD(7) |
| | | | g | 38 | 38 | 38 | 42 |
| | | 14BG | g | 56 | 47 | 47 | - |
| | | NPG | g | - | - | - | 49 |
| | Content of amine (in terms of nitrogen atoms) | | ppm by mass | 2 | 6 | 56 | 6 |
| | Content of aldehyde*2 | | ppm by mass | 710 | 320 | 50 | 350 |
| | Abbreviation of dihydroxy compound composition | | - | HD(4-1) | HD(5-1) | HD(6-1) | HD(7-1) |
| Blending amount of PCD raw material | Dihydroxy compound composition | | Kind | HD(4-1) | HD(5-1) | HD(6-1) | HD(7-1) |
| | | | g | 94 | 85 | 85 | 91 |
| | Carbonate compound | DPC | g | 166 | 154 | 154 | 158 |
| | Catalyst | Mg catalyst aqueous solution | mL | 04 | 0.4 | 0.4 | 0.4 |
| PCD | Content of amine-derived structural unit (in terms of nitrogen atoms) | | ppm by mass | 4 | 3 | 44 | 9 |
| | Number average molecular weight (Mn) | | - | 1588 | 1631 | 1692 | 1656 |
| | Content of aldehyde*2 | | ppm by mass | 289 | 197 | 26 | 211 |
| | Color tone (APHA) | | - | 80 | 80 | 50 | 94 |
| *1: heat treatment conditions: 100 g or 150 g of 16HD is heated in air at temperature of 130°C for 3 hours.<br>*2: aldehyde: 1-hydroxy-6-hexanal | | | | | | | |

From Examples 7 to 11 and Comparative Examples 2 and 3, it is clear that the addition of an amine to the dihydroxy compound (16HD) reduces the content of the aldehyde in the dihydroxy compound composition after a heat treatment.

In addition, the polycarbonate diol obtained in Examples have a small content of aldehyde and a better color tone (APHA) than Comparative Examples, which is at an industrially acceptable level.

From this result, it is clear that when the content of the amine (in terms of nitrogen atoms) is 100 ppm by mass or

less when producing a polycarbonate diol, the content of the aldehyde in the dihydroxy compound composition after a heat treatment can be reduced. Further, it is clear that the content (in terms of nitrogen atoms) of the amine-derived structural unit in the obtained polycarbonate diol is 80 ppm by mass or less, and the content of the aldehyde in the polycarbonate diol can be reduced, so that the coloration of the polycarbonate diol can be prevented and the color tone is improved.

Although the present invention has been described in detail using specific embodiments, it will be apparent to those skilled in the art that various modifications are possible within the scope of the invention.

The present application is based on a Japanese patent application (No. 2023-018540) filed on February 9, 2023, a Japanese patent application (No. 2023-042052) filed on March 16, 2023, and a Japanese patent application (No. 2023-136449) filed on August 24, 2023, the entireties of which are incorporated by reference.

## Claims

1. A polycarbonate diol comprising: a structural unit (1) represented by the following general formula (I) and a structural unit (2) represented by the following general formula (II):

[Chem. 1]

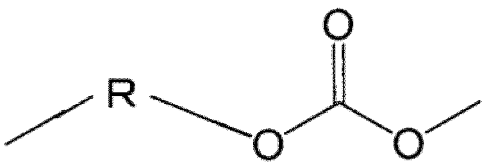

(I)

(in the general formula (I), R represents a hydrocarbon group having 2 to 20 carbon atoms, which may have a substituent or a hetero atom), and

[Chem. 2]

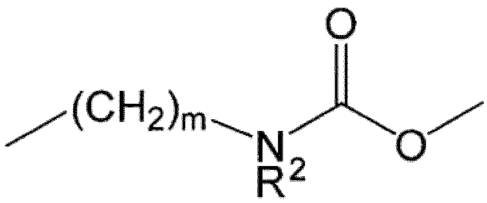

(II)

(in the general formula (II), m is an integer of 2 to 20, and $R^2$ represents an alkyl group having 1 to 20 carbon atoms, which may have a substituent, or a hydrogen atom).

2. The polycarbonate diol according to claim 1, wherein the structural unit (1) includes a structural unit (Ia) represented by the following general formula (Ia):

[Chem. 3]

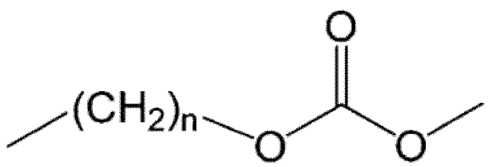

(Ia)

(in the general formula (Ia), n is an integer of 2 to 20).

3. The polycarbonate diol according to claim 1, wherein the structural unit (2) is a structural unit derived from an amine having an aliphatic hydrocarbon group having 2 to 20 carbon atoms, which may have a substituent.

**4.** The polycarbonate diol according to claim 1, wherein the structural unit (2) contains one or more amino groups and one or more functional groups, and the functional group is a structural unit derived from at least one amine selected from the group consisting of a hydroxy group, a carboxy group, a formyl group, and an amino group.

**5.** The polycarbonate diol according to claim 1, wherein the structural unit (2) includes a structural unit derived from an amine represented by the following general formula (II-1):

[Chem. 4]

$$R^2HN-R^1-[X]_r \qquad (II-1)$$

(in the general formula (II-1), $R^1$-$[X]_r$ represents an alkyl group having 2 to 20 carbon atoms and having r substituents X, which may have a substituent other than X, X represents any one of a hydroxy group, a carboxy group, a formyl group, and an amino group, r is an integer of 1 to 6, and $R^2$ represents an alkyl group having 1 to 20 carbon atoms, which may have a substituent, or a hydrogen atom).

**6.** The polycarbonate diol according to claim 1, wherein the structural unit (2) is a structural unit derived from at least one amine selected from a primary amine (2-1) and a secondary amine (2-2).

**7.** The polycarbonate diol according to claim 5, wherein the structural unit (2) includes a structural unit derived from at least one amine selected from 6-amino-1-hexanol, 6-methylamino-I-hexanol, and 6-ethylamino-1-hexanol.

**8.** The polycarbonate diol according to any one of claims 1 to 7, wherein a content of the structural unit (2) contained in the polycarbonate diol is 1 ppm by mass or more in terms of nitrogen atoms with respect to a total mass of the polycarbonate diol.

**9.** The polycarbonate diol according to any one of claims 1 to 7, wherein a content of the structural unit (2) contained in the polycarbonate diol is 1,200 ppm by mass or less in terms of nitrogen atoms with respect to a total mass of the polycarbonate diol.

**10.** The polycarbonate diol according to claim 9, wherein the content of the structural unit (2) contained in the polycarbonate diol is 80 ppm by mass or less in terms of nitrogen atoms with respect to the total mass of the polycarbonate diol.

**11.** The polycarbonate diol according to claim 10, further comprising:
an aldehyde.

**12.** The polycarbonate diol according to claim 1, wherein the polycarbonate diol has a number average molecular weight (Mn) of 250 or more and 5,000 or less.

**13.** A method for producing a polycarbonate diol, comprising:

polycondensing a carbonate compound and a dihydroxy compound composition containing an amine and a dihydroxy compound (1) represented by the following general formula (I-1) by a transesterification reaction in the presence of a catalyst, to obtain a polycarbonate diol containing a structural unit (2) represented by the following general formula (II):
[Chem. 5]

HO-R-OH (I-1)

(in the general formula (I-1), R is a hydrocarbon group having 2 to 20 carbon atoms, which may have a substituent or a hetero atom), and

[Chem. 6]

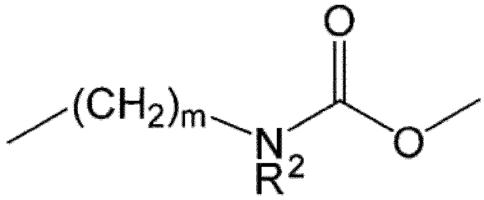

(II)

(in the general formula (II), m is an integer of 2 to 20, and $R^2$ represents an alkyl group having 1 to 20 carbon atoms, which may have a substituent, or a hydrogen atom).

**14.** The method for producing a polycarbonate diol according to claim 13, wherein the polycarbonate diol contains a structural unit (1) represented by the following general formula (I):

[Chem. 7]

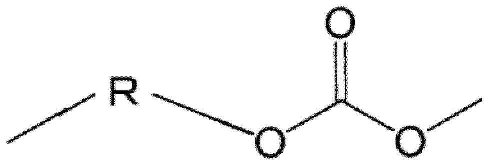

(I)

(in the general formula (I), R is a hydrocarbon group having 2 to 20 carbon atoms, which may have a substituent or a hetero atom).

**15.** The method for producing a polycarbonate diol according to claim 13, wherein the amine is an amine having an aliphatic hydrocarbon group having 2 to 20 carbon atoms which may have a substituent.

**16.** The method for producing a polycarbonate diol according to claim 13, wherein the amine contains one or more amino groups and one or more functional groups, and the functional group is at least one selected from the group consisting of a hydroxy group, a carboxy group, a formyl group, and an amino group.

**17.** The method for producing a polycarbonate diol according to claim 13, wherein the amine includes an amine represented by the following general formula (II-1):

[Chem. 8]

$$R^2HN-R^1\left[X\right]_r \qquad (II\text{-}1)$$

(in the general formula (II-1), $R^1$-$[X]_r$ represents an alkyl group having 2 to 20 carbon atoms and having r substituents X, which may have a substituent other than X, X represents any one of a hydroxy group, a carboxy group, a formyl group, and an amino group, r is an integer of 1 to 6, and $R^2$ represents an alkyl group having 1 to 20 carbon atoms, which may have a substituent, or a hydrogen atom).

**18.** The method for producing a polycarbonate diol according to claim 13, wherein the amine includes at least one selected from a primary amine (2-1) and a secondary amine (2-2).

**19.** The method for producing a polycarbonate diol according to claim 17, wherein the amine includes at least one selected from 6-amino-1-hexanol, 6-methylamino-1-hexanol, and 6-ethylamino-1-hexanol.

**20.** The method for producing a polycarbonate diol according to any one of claims 13 to 19, wherein a content of the amine

in the dihydroxy compound composition is 1 ppm by mass or more in terms of nitrogen atoms with respect to a total mass of the dihydroxy compound composition.

**21.** The method for producing a polycarbonate diol according to any one of claims 13 to 19, wherein a content of the amine in the dihydroxy compound composition is 1,500 ppm by mass or less in terms of nitrogen atoms with respect to a total mass of the dihydroxy compound composition.

**22.** The method for producing a polycarbonate diol according to claim 21, wherein the content of the amine in the dihydroxy compound composition is 100 ppm by mass or less in terms of nitrogen atoms with respect to the total mass of the dihydroxy compound composition.

**23.** The method for producing a polycarbonate diol according to claim 22, wherein the dihydroxy compound composition further contains an aldehyde.

**24.** The method for producing a polycarbonate diol according to any one of claims 13 to 19, wherein a content of the structural unit (2) contained in the polycarbonate diol is 1 ppm or more in terms of nitrogen atoms with respect to a total mass of the polycarbonate diol.

**25.** The method for producing a polycarbonate diol according to any one of claims 13 to 19, wherein a content of the structural unit (2) contained in the polycarbonate diol is 1,200 ppm by mass or less in terms of nitrogen atoms with respect to a total mass of the polycarbonate diol.

**26.** The method for producing a polycarbonate diol according to claim 25, wherein the content of the structural unit (2) contained in the polycarbonate diol is 80 ppm by mass or less in terms of nitrogen atoms with respect to the total mass of the polycarbonate diol.

**27.** The method for producing a polycarbonate diol according to claim 26, wherein the polycarbonate diol further contains an aldehyde.

**28.** A polyurethane obtained by using the polycarbonate diol according to claim 1.

**29.** The polyurethane according to claim 28, which is for use in any one selected from the group consisting of an active energy ray-curable polymer composition, an artificial leather, a synthetic leather, a coating material, a coating agent, an elastic fiber, a pressure-sensitive adhesive, and an adhesive.

**INTERNATIONAL SEARCH REPORT**

International application No.
**PCT/JP2024/004009**

**A. CLASSIFICATION OF SUBJECT MATTER**

***C08G 64/02***(2006.01)i; ***C08G 18/44***(2006.01)i; ***C08G 64/30***(2006.01)i; ***C08G 71/04***(2006.01)i; ***C09D 175/04***(2006.01)i; ***C09J 175/04***(2006.01)i; ***D01F 6/70***(2006.01)i; ***D06N 3/14***(2006.01)i
FI: C08G64/02; C08G18/44; C09D175/04; C09J175/04; D06N3/14 101; C08G64/30; C08G71/04; D01F6/70 Z

According to International Patent Classification (IPC) or to both national classification and IPC

**B. FIELDS SEARCHED**

Minimum documentation searched (classification system followed by classification symbols)

C08G64/02; C08G18/44; C08G64/30; C08G71/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2012-502143 A (NOVOMER, INC.) 26 January 2012 (2012-01-26)<br>claims 1-3, 7, 71, 91, 100, 114, paragraphs [0211]-[0227] | 1-10, 12<br>11, 13-29 |
| A | US 2008/0153931 A1 (BASF AKTIENGESELLSCHAFT) 26 June 2008 (2008-06-26) | 1-29 |
| A | US 2014/0024795 A1 (NOVOMER, INC.) 23 January 2014 (2014-01-23) | 1-29 |
| A | JP 2013-523971 A (SK INNOVATION CO., LTD.) 17 June 2013 (2013-06-17) | 1-19 |
| A | US 2018/0291149 A1 (COVESTRO DEUTSCHLAND AG) 11 October 2018 (2018-10-11) | 1-29 |

☐ Further documents are listed in the continuation of Box C.
☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 April 2024** | **23 April 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**
**Information on patent family members**

International application No.
**PCT/JP2024/004009**

| Patent document cited in search report | Publication date (day/month/year) | Patent family member(s) | Publication date (day/month/year) |
|---|---|---|---|
| JP 2012-502143 A | 26 January 2012 | WO 2010/028362 A1<br>claims 1-3, 7, 71, 91, 100, 114, page 62, line 11 to page 67, line 8 | |
| | | US 2011/0230580 A1 | |
| | | US 2013/0066044 A1 | |
| | | US 2013/0244864 A1 | |
| | | US 8921508 B2 | |
| | | US 2015/0299386 A1 | |
| | | US 2016/0264728 A1 | |
| | | US 2018/0022869 A1 | |
| | | US 2019/0233586 A1 | |
| | | US 2021/0171708 A1 | |
| | | EP 3257887 A1 | |
| | | KR 10-2011-0048024 A | |
| | | CN 102149746 A | |
| | | KR 10-2012-0034813 A | |
| | | CA 2736482 A1 | |
| | | CN 103333330 A | |
| | | SG 193820 A | |
| | | KR 10-2014-0116970 A | |
| | | BR PI0919323 A | |
| | | CN 107266669 A | |
| | | CN 107266670 A | |
| | | KR 10-2017-0137219 A | |
| | | KR 10-2018-0118825 A | |
| | | KR 10-2020-0028511 A | |
| | | CN 111848940 A | |
| | | HK 1247224 A | |
| | | KR 10-2022-0018610 A | |
| | | JP 2015-28182 A | |
| | | JP 2017-201044 A | |
| | | JP 2020-186409 A | |
| US 2008/0153931 A1 | 26 June 2008 | WO 2006/084816 A1 | |
| | | EP 1953207 A1 | |
| | | DE 102005006030 A1 | |
| | | CA 2596821 A1 | |
| | | NO 20073902 B | |
| | | BR PI0606921 A | |
| | | RU 2007133564 A | |
| | | MX 2007009513 A | |
| US 2014/0024795 A1 | 23 January 2014 | WO 2013/163442 A1 | |
| JP 2013-523971 A | 17 June 2013 | US 2011/0245424 A1 | |
| | | US 2013/0289297 A1 | |
| | | WO 2011/126195 A1 | |
| | | KR 10-2011-0112061 A | |
| | | TW 201134851 A | |
| | | CA 2795533 A1 | |
| | | CN 102939319 A | |
| | | BR 112012025527 A | |

Form PCT/ISA/210 (patent family annex) (July 2022)

**INTERNATIONAL SEARCH REPORT**
**Information on patent family members**

International application No.
**PCT/JP2024/004009**

| Patent document cited in search report | Publication date (day/month/year) | Patent family member(s) | Publication date (day/month/year) |
|---|---|---|---|
| US 2018/0291149 A1 | 11 October 2018 | WO 2016/188992 A1 | |
| | | EP 3098252 A1 | |
| | | CN 107849232 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H02289616 A
- JP H0551428 A
- JP 2012072350 A
- JP 2018053072 A
- WO 2015199070 A
- WO 2015016261 A
- WO 2018088575 A
- JP 2023018540 A
- JP 2023042052 A
- JP 2023136449 A


### Non-patent literature cited in the description


- Polyurethane no Kiso to Oyo (Basic and Application of Polyurethane). CMC Publishing Co., Ltd., November 2006, 96-106
- **SCHNELL**. *Polymer Reviews*, 1994, vol. 9, 9-20